# EUROPEAN PATENT SPECIFICATION

(11) **EP 2 309 426 B1**
(45) Date of publication and mention of the grant of the patent: **23.10.2013**
(21) Application number: 09802387.2
(22) Date of filing: 15.07.2009
(51) Int. Cl.: G06K 19/06

(54) **TWO-DIMENSIONAL BAR CODE ENCODING METHOD, DECODING METHOD AND DEVICE, TERMINAL**
VERFAHREN ZUR KODIERUNG EINES ZWEIDIMENSIONALEN BARCODES, DEKODIERUNGSVERFAHREN UND -VORRICHTUNG SOWIE ENDGERÄT
PROCÉDÉ DE CODAGE À CODE À BARRES BIDIMENSIONNEL, PROCÉDÉ ET DISPOSITIF DE DÉCODAGE, TERMINAL

(30) Priority: 30.07.2008 CN 200810142574
(43) Date of publication of application: 13.04.2011
(73) Proprietor: Huawei Technologies Co., Ltd., Longgang District, Shenzhen Guangdong 518129 (CN)
(72) Inventor: WANG, Lei, Shenzhen (CN); YANG, Jian, Shenzhen (CN); FAN, Shunan, Shenzhen (CN); DONG, Ting, Shenzhen (CN); CHEN, Guoqiao, Shenzhen (CN); ZHANG, Huiping, Shenzhen (CN)
(74) Representative: Körber, Martin Hans
(86) International application number: PCT/CN2009/072777
(87) International publication number: WO 2010/012194

(56) References cited:
- CN-A- 101 101 628
- CN-A- 101 132 293
- CN-A- 101 281 607
- CN-C- 1 294 519
- US-A1- 2006 071 077
- US-A1- 2006 262 328
- "ISO/IEC 16022:2006. Information technology. Automatic identification and data capture techinques. Data Matrix bar code symbology specification", INTERNATIONAL STANDARD ISO/IEC, XX, XX, vol. 16022, 1 January 2006 (2006-01-01), pages 1-132, XP009134368,

## Description

### Field of the Invention

The present invention relates to communication technologies and computer technologies, and in particular, to a method and apparatus for encoding and decoding two-dimensional barcodes.

### Background of the Invention

With the development of technologies, a barcode needs to express more information in a limited geometric space to meet requirements of all sorts of information. The two-dimensional barcode is put forward to solve problems of the one-dimensional barcode. Two-dimensional barcodes use a geometric graph that alternates black and white regularly on a plane (in two dimensions) to record data information. The formation of the barcodes draws upon the concept of 0s and 1s that constitute the internal logics of a computer, and uses several geometric forms corresponding to the binary system to represent text and value information. The information is identified by an image input device or a photoelectric scanner automatically, and processed automatically. The barcodes have common properties of barcode technologies: each code system has a specific character set; each character occupies a certain width; and a certain check function is available. Meanwhile, they are capable of identifying information in different rows automatically, and processing the rotary change of the graph. Two-dimensional barcodes can express information horizontally and vertically. Therefore, they express masses of information in a very small area. Being characterized by high density and high capacity, two-dimensional barcodes can express data files (including files of Chinese characters) and pictures. Two-dimensional barcodes are the most ideal means of storing, carrying and automatically identifying large-capacity and highly reliable information such as credentials and cards.

Among scores of two-dimensional barcodes, common code systems include: PDF417, Datamatrix, Maxicode, QR Code, Code 49, Code 16K, and Code one. Other barcodes in addition to such common two-dimensional barcodes include: Vericode, CP Code, Codablock F, Calra Code, Ultracode, and Aztec Code.

To put it simply, the technology for scanning two-dimensional barcodes by a mobile phone is to scan the two-dimensional barcodes through the photographing function of the mobile phone and obtain the information stored in the two-dimensional barcodes quickly for the purposes of accessing the Internet, sending short messages, dialing a number, exchanging data, and inputting texts automatically. The technology for scanning two-dimensional barcodes by a mobile phone is now developed by well-known mobile phone manufacturers.

Two-dimensional barcodes that may be scanned by a mobile phone can be printed on newspapers, magazines, advertisements, books, packages, and personal name cards. A user can use a mobile phone to scan a two-dimensional barcode, or input the number under the two-dimensional barcode to access the Internet quickly on the mobile phone, and download the pictures and texts to understand the product information of an enterprise anytime and anywhere.

US 2006/071077 A1 discloses a method for generating and displaying visually encoding data for short-range data communication, which includes the steps of selecting data to be communicated, segmenting the selected data into a plurality of data segments suitable for visual encoding using a single visual tag, providing each of the plurality of data segments with a linking indicator, encoding the plurality of data segments into a plurality images or visually encoded data; and displaying, sequentially, each of the plurality of images of visually encoded data on a display device. The linking indicator may take the form of a data segment number and a total data segment number, and a linking indicator is assigned to an image. Both the data segment and the linking indicator assigned will be encoded.

US2006/262328 A1 discloses an editing program that, when changing a size of a QR code, increases or decreases a size of cells to thereby scaling up or down an entirely of QR code, respectively.

ISO/IEC 16022:2006 XP009134368 discloses the general "structured append" concept for two-dimensional data matrix codes with a symbols sequence indicating the position and the total number of the symbols to be concatenated.

The capacity of two-dimensional barcodes in the prior art is limited.

### Summary of the Invention

The present invention provides a method and apparatus for generating two-dimensional barcodes, which can extend the upper-layer application scope supported by the two-dimensional barcodes, and break through the capacity bottleneck of the two-dimensional barcodes.

Through the splicer area in the two-dimensional barcodes, the present invention extends the capacity of the upper-layer application data supported by the two-dimensional barcodes.

### Brief Description of the Drawings

FIG. 1 is a flowchart of a method for encoding two-dimensional barcodes in a first embodiment of the present invention;
FIGS. 2Aand 2B are a flowchart of a method for decoding two-dimensional barcodes in the first embodiment of the present invention;
FIG. 3 shows an apparatus for encoding two-dimensional barcodes in the first embodiment of the present invention;
FIG. 4 shows an apparatus for decoding two-dimensional barcodes in the first embodiment of the present invention;
FIG. 5 is a flowchart of a method for encoding two-dimensional barcodes in a second embodiment of the present invention;
FIGS. 6A and 6B are a flowchart of a method for decoding two-dimensional barcodes in the second embodiment of the present invention;
FIG. 7 shows an apparatus for encoding two-dimensional barcodes in the second embodiment of the present invention;
FIG. 8 shows an apparatus for decoding two-dimensional barcodes in the second embodiment of the present invention;
FIG. 9 is a flowchart of a method for encoding two-dimensional barcodes in a third embodiment of the present invention;
FIGS.10A and 10B are a flowchart of a method for decoding two-dimensional barcodes in the third embodiment of the present invention;
FIG. 11 shows an apparatus for encoding two-dimensional barcodes in the third embodiment of the present invention;
FIG. 12 shows an apparatus for decoding two-dimensional barcodes in the third embodiment of the present invention;
FIG. 13 shows a terminal provided in a fourth embodiment of the present invention;
FIG. 14 shows a terminal provided in the fourth embodiment of the present invention; and
FIG. 15 shows a terminal provided in the fourth embodiment of the present invention.

### Detailed Description of the Embodiments

### Embodiment 1

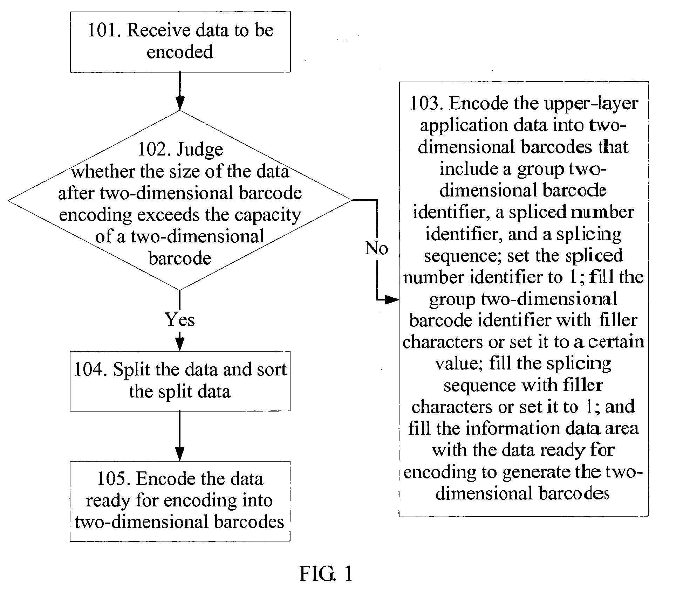

As shown in FIG. 1, a method for encoding two-dimensional barcodes in this embodiment includes the following steps:
101. Obtain data to be encoded.
102. Judge whether the size of the data after two-dimensional barcode encoding exceeds the capacity of a two-dimensional barcode. If not, proceed to step 103; if so, go to step 104.

After encoding, the two-dimensional barcode includes a splicer area and an information data area. Once the encoding mode is determined, the additional size derived from the encoding (such as the splicer area) is determined, and the size of the data after it is encoded to a two-dimensional barcode can be calculated out beforehand. The information capacity of each two-dimensional barcode is equal to the size of the splicer area plus the size of the information data area. That is, in a group of two-dimensional barcodes derived from encoding, each two-dimensional barcode fulfills the following condition: Size of information data area = Information capacity of each two-dimensional barcode - Size of splicer area.

103. Encode the upper-layer application data to two-dimensional barcodes that include a group two-dimensional barcode identifier, a spliced number identifier, and a splicing sequence.

The group two-dimensional barcode identifier identifies a group of two-dimensional barcodes that need to be spliced. The same group of two-dimensional barcodes for splicing has the same group two-dimensional barcode identifier. For example, the identifier is a value in 0-65535.

The spliced number identifier indicates the number of spliced two-dimensional barcodes resulting from splitting the data to be encoded. For example, an octet is used to express the number of barcodes, and 256 values in 0-255 can identify 255 two-dimensional barcodes except an all-zero value.

The splicing sequence is valid when the number of spliced barcodes is not zero. The splicing sequence indicates the position of this two-dimensional barcode in the spliced application data. For example, an octet is used to indicate the splicing sequence. 256 values in 0-255 can identify 255 two-dimensional barcodes except an all-zero value.

The spliced number identifier is set to 1; the group two-dimensional barcode identifier may be filled with fill characters or set to a certain value; the splicing sequence may be filled with fill characters or set to 1; and the information data area is filled with the data ready for encoding to generate the two-dimensional barcodes. Exit.

104. Split and sort data. The information capacity of each two-dimensional barcode is equal to the size of the splicer area plus the size of the information data area. That is, in a group of two-dimensional barcodes derived from encoding, each two-dimensional barcode fulfills the following condition: Size of information data area = Information capacity of each two-dimensional barcode - Size of splicer area. Therefore, at the time of splitting data, the data to be encoded is fragmented based on the size of the information data area, and a sequence number is allocated to each fragment sequentially.

105. Encode the data ready for encoding to two-dimensional barcodes.

The spliced number identifier is set to the number of fragments. The splicing sequence is equal to the sequence number. The group two-dimensional barcode identifier of the group is set to the same number. The information data area of each two-dimensional barcode is filled with the data fragment respectively (in the last fragment, if the metadata is smaller than the size of the information data area, fill bits may be applied).

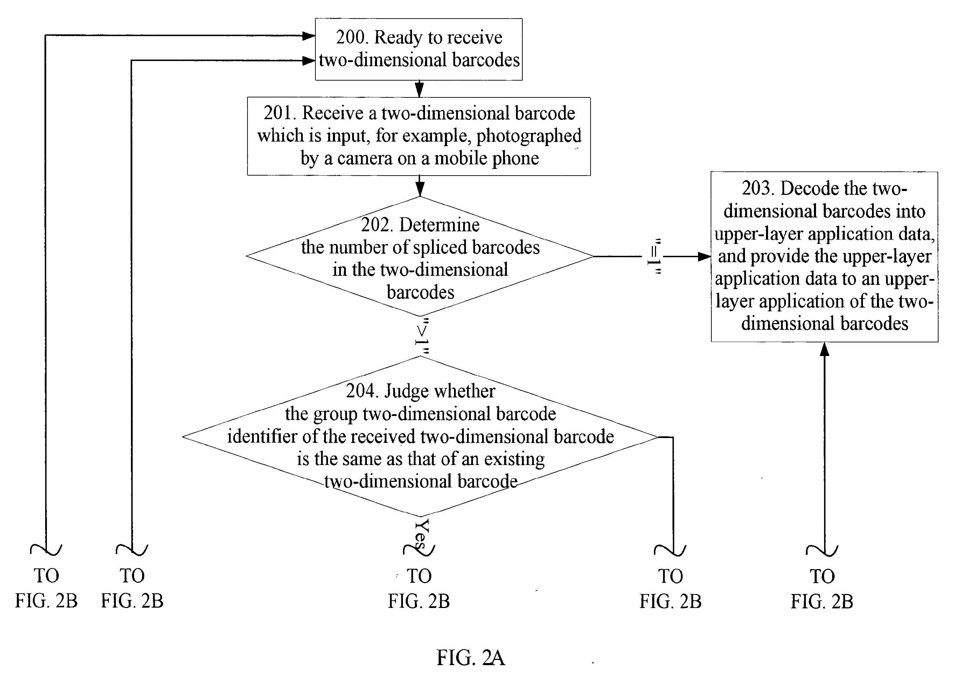

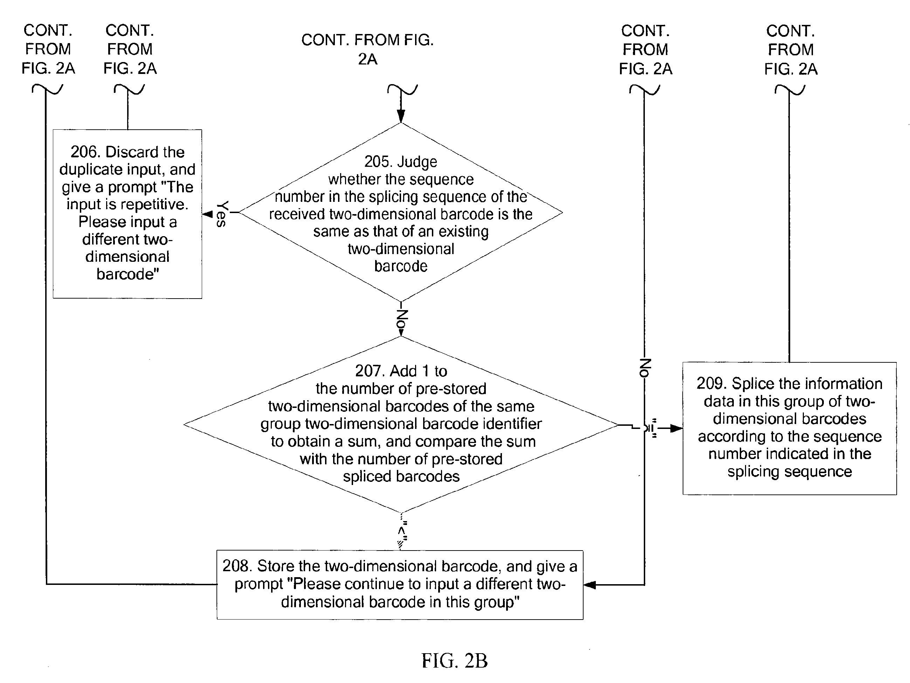

As shown in FIG. 2, a method for decoding two-dimensional barcodes in this embodiment includes the following steps:

200. Be ready to obtain two-dimensional barcodes that include a splicer area and an information data area.

201. Obtain a two-dimensional barcode which is input, for example, photographed by a camera on a mobile phone.

202. Determine the number of spliced barcodes in the two-dimensional barcodes. If the number of spliced barcodes is equal to 1, proceed to step 203; if the number of spliced barcodes is greater than 1, go to step 204.

203. Decode the two-dimensional barcodes to upper-layer application data, and provide the upper-layer application data to an upper-layer application of the two-dimensional barcodes. Exit.

204. Judge whether the group two-dimensional barcode identifier of the obtained two-dimensional barcode is the same as that of a decoded two-dimensional barcode. If so, proceed to step 205; if not, go to step 208.

205. Judge whether the sequence number in the splicing sequence of the obtained two-dimensional barcode is the same as that of a decoded two-dimensional barcode. If so, proceed to step 206; if not, go to step 207.

206. Discard the duplicate input, and give a prompt "The input is repetitive. Please input a different two-dimensional barcode." Go back to step 200.

207. Add 1 to the number of pre-stored two-dimensional barcodes of the same group two-dimensional barcode identifier to obtain a sum, and compare the sum with the number of spliced barcodes. If the sum is less than the number of spliced barcodes, proceed to step 208; if the sum is equal to the number of spliced barcodes, go to step 209.

208. Store the two-dimensional barcode, and give a prompt "Please continue to input a different two-dimensional barcode in this group." Go back to step 200.

209. Splice the information data in this group of two-dimensional barcodes according to the sequence number. Go back to step 203.

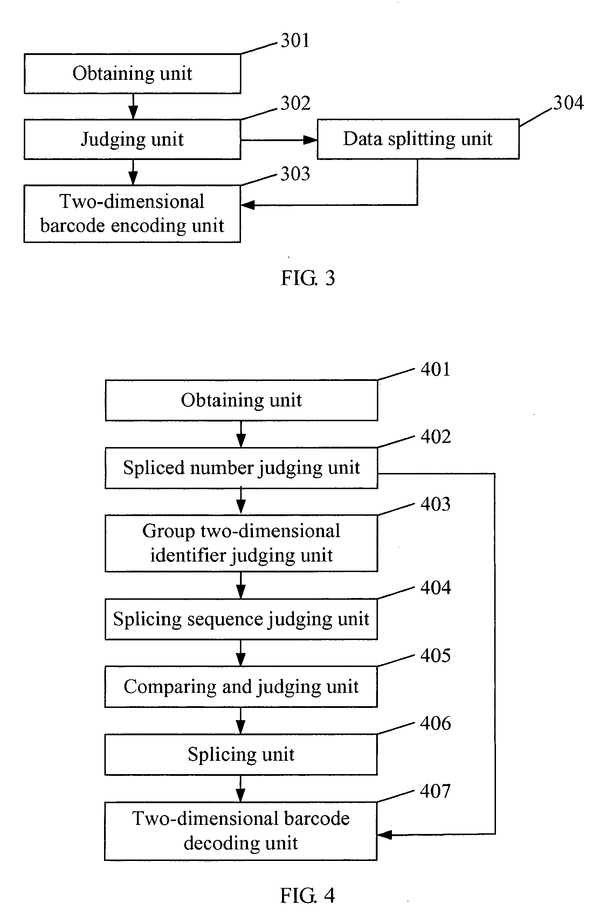

As shown in FIG. 3, an apparatus for encoding two-dimensional barcodes in the first embodiment of the present invention includes:
an obtaining unit 301, adapted to obtain the data ready for encoding; and
a two-dimensional barcode encoding unit 303, adapted to encode the data ready for encoding, and generate two-dimensional barcodes that include a splicer area and an information data area.

The apparatus may further include:
a judging unit 302, adapted to judge whether the size of the data ready for encoding exceeds the corresponding two-dimensional barcode capacity of the data ready for encoding, whereupon a data splitting unit 304 splits the data if the size of the data exceeds the capacity, or the two-dimensional barcode encoding unit 303 performs two-dimensional barcode encoding for the data directly if the size of the data does not exceed the capacity; and
the data splitting unit 304, adapted to: split the data ready for encoding to fragments, sort the fragments and provide them to the two-dimensional barcode encoding unit 303 for encoding if the judging unit 302 determines that the size of the application data exceeds the corresponding two-dimensional barcode capacity of the data ready for encoding.

As shown in FIG. 4, an apparatus for decoding two-dimensional barcodes in the first embodiment of the present invention includes:
an obtaining unit 401, adapted to obtain two-dimensional barcodes that include a splicer area and an information data area; and
a two-dimensional barcode decoding unit 407, adapted to: decode the two-dimensional barcodes to upper-layer application data, and provide the upper-layer application data to an upper-layer application of the two-dimensional barcodes.

The apparatus may further include:
a spliced number judging unit 402, adapted to judge the number of spliced two-dimensional barcodes obtained by the obtaining unit 401, and provide the upper-layer information codes of the two-dimensional barcodes to the two-dimensional barcode decoding unit 407 if the number is equal to 1;
a group two-dimensional barcode identifier judging unit 403, adapted to judge whether the group two-dimensional barcode identifier of the obtained two-dimensional barcode is the same as that of a decoded two-dimensional barcode if the spliced number judging unit 402 determines that the number of spliced barcodes is greater than 1;
a splicing sequence judging unit 404, adapted to judge whether the sequence number in the splicing sequence of the obtained two-dimensional barcode is the same as that of the decoded two-dimensional barcode if the group two-dimensional barcode identifier judging unit 403 determines that the group two-dimensional barcode identifier of the obtained two-dimensional barcode is the same as that of the decoded two-dimensional barcode;
a comparing and judging unit 405, adapted to: add 1 to the number of pre-stored two-dimensional barcodes of the same group two-dimensional barcode identifier to obtain a sum, and compare the sum with the number of spliced barcodes if the splicing sequence judging unit 404 determines that no two-dimensional barcode of the same splicing sequence is received; and
a splicing unit 406, adapted to: splice the information data in this group of two-dimensional barcodes according to the sequence number if the comparing and judging unit 405 determines that the sum is equal to the number of spliced barcodes, and provide the information data to the two-dimensional barcode decoding unit 407.

### Embodiment 2

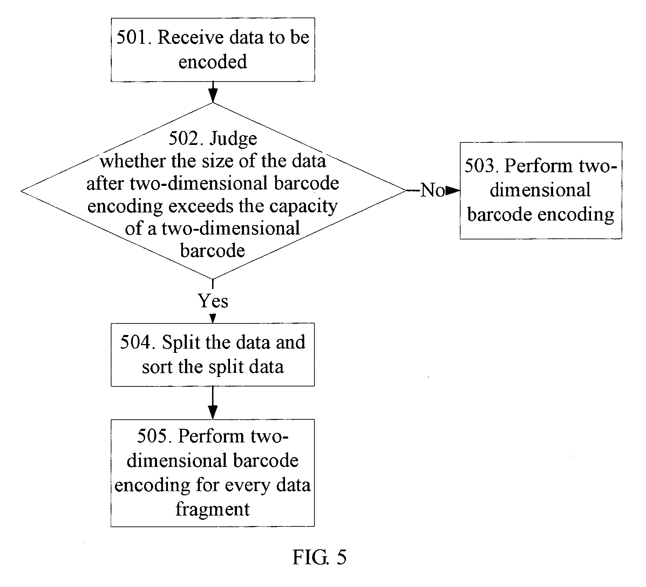

As shown in FIG. 5, a method for encoding two-dimensional barcodes in this embodiment includes the following steps:

501. Obtain data to be encoded.

502. Judge whether the size of the data after two-dimensional barcode encoding exceeds the capacity of a two-dimensional barcode. If not, proceed to step 503; if so, go to step 504.

After encoding, the two-dimensional barcode includes a splicer area and an information data area. Once the encoding mode is determined, the additional size derived from the encoding (such as the splicer area) is determined, and the size of the data after it is encoded to a two-dimensional barcode can be calculated out beforehand. The information capacity of each two-dimensional barcode is equal to the size of the splicer area plus the size of the information data area. That is, in a group of two-dimensional barcodes derived from encoding, each two-dimensional barcode fulfills the following condition: Size of information data area = Information capacity of each two-dimensional barcode - Size of splicer area.

503. Perform two-dimensional barcode encoding:

If the splicing identifier is 0, the data ready for encoding is input to the information data area to generate a group of two-dimensional barcodes. Exit.

504. Split and sort data. The information capacity of each two-dimensional barcode is equal to the size of the splicer area plus the size of the information data area. That is, in a group of two-dimensional barcodes derived from encoding, each two-dimensional barcode fulfills the following condition: Size of information data area = Information capacity of each two-dimensional barcode - Size of splicer area. Therefore, at the time of splitting data, the data to be encoded is fragmented based on the size of the information data area, and a sequence number is allocated to each fragment sequentially.

505. Perform two-dimensional barcode encoding for every data fragment.

The two-dimensional barcode includes a splicing identifier, a group two-dimensional barcode identifier, a spliced number identifier, and a splicing sequence.

The splicing identifier indicates whether the two-dimensional barcode needs splicing. The value "1" indicates need of splicing.

The group two-dimensional barcode identifier identifies a group of two-dimensional barcodes that need to be spliced. The same group of two-dimensional barcodes for splicing has the same group two-dimensional barcode identifier; for example, the identifier is a value in 0-65535.

The spliced number identifier indicates the number of two-dimensional barcodes resulting from splitting the upper-layer application data; for example, an octet is used to express the number of barcodes, and 256 values in 0-255 can identify 255 two-dimensional barcodes except an all-zero value.

The splicing sequence is valid when the number of spliced barcodes is not zero. The splicing sequence indicates the position of this barcode in the spliced application data. For example, an octet is used to indicate the splicing sequence. 256 values in 0-255 can identify 255 two-dimensional barcodes except an all-zero value.

The splicing identifier is set to 1. The spliced number identifier is set to the number of fragments. The splicing sequence is equal to the sequence number. The group two-dimensional barcode identifier of the group is set to the same number. The information data area of each two-dimensional barcode is filled with the data fragment respectively (in the last fragment, if the metadata is smaller than the size of the information data area, fill bits may be applied). In this way, a group of two-dimensional barcodes is generated.

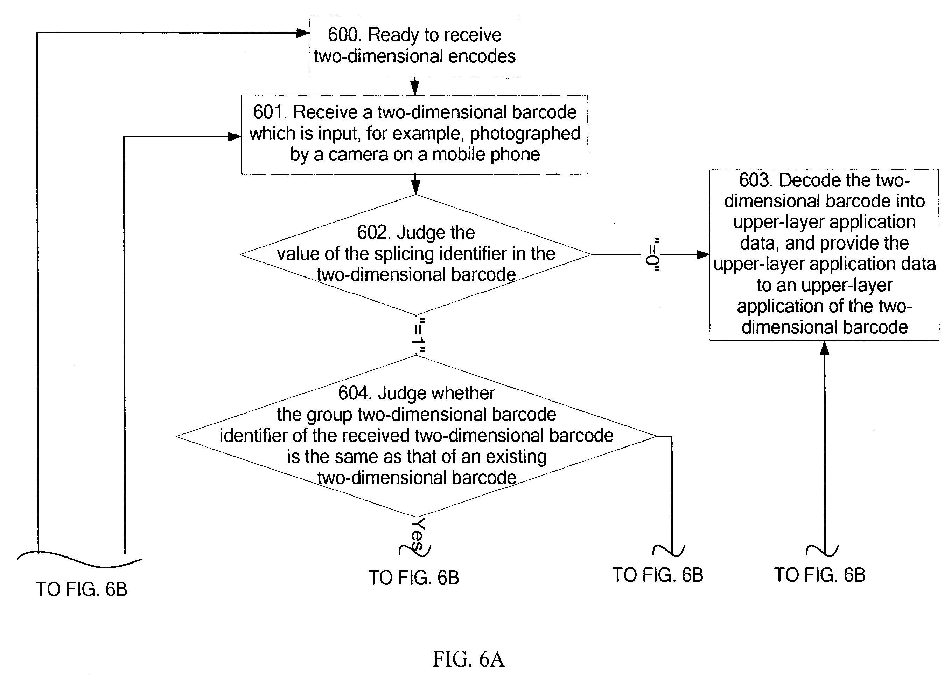

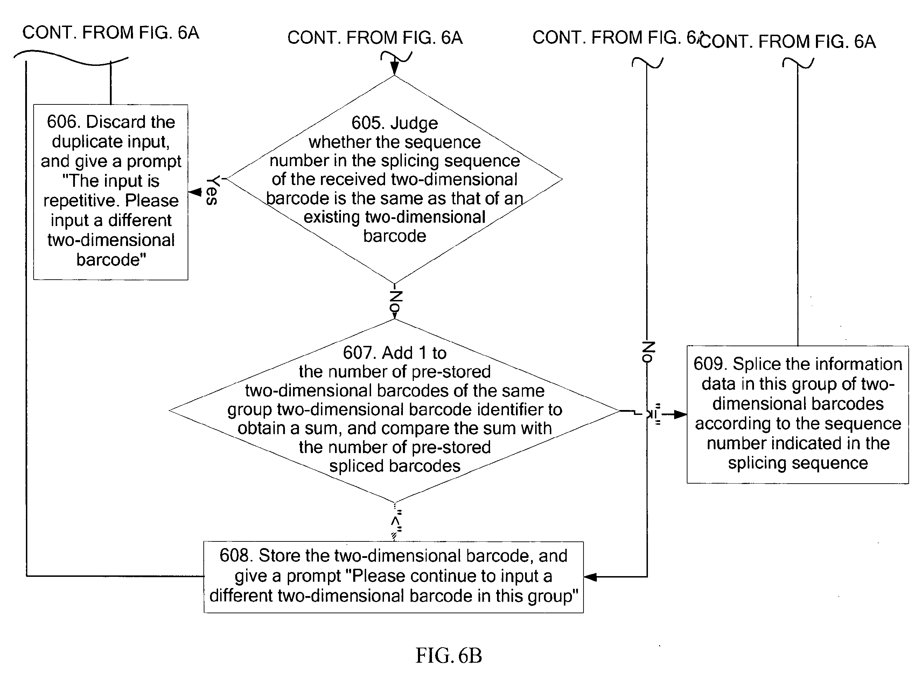

As shown in FIG. 6, a method for decoding two-dimensional barcodes in the second embodiment includes the following steps:

600. Be ready to obtain two-dimensional barcodes.

601. Obtain a two-dimensional barcode which is input, for example, photographed by a camera on a mobile phone.

602. Determine the splicing identifier in the two-dimensional barcode information code. If the splicing identifier is equal to 0, proceed to step 603; if the splicing identifier is equal to 1, go to step 604.

603. Decode the two-dimensional barcode to upper-layer application data, and provide the upper-layer application data to an upper-layer application of the two-dimensional barcode. Exit.

604. Judge whether the group two-dimensional barcode identifier of the obtained two-dimensional barcode is the same as that of a decoded two-dimensional barcode. If so, proceed to step 605; if not, go to step 608.

605. Judge whether the sequence number in the splicing sequence of the obtained two-dimensional barcode is the same as that of a decoded two-dimensional barcode. If so, proceed to step 606; if not, go to step 607.

606. Discard the duplicate input, and give a prompt "The input is repetitive. Please input a different two-dimensional barcode."

607. Add 1 to the number of pre-stored two-dimensional barcodes of the same group two-dimensional barcode identifier to obtain a sum, and compare the sum with the number of spliced barcodes. If the sum is equal to the number of spliced barcodes, go to step 609; if the sum is less than the number of spliced barcodes, proceed to step 608.

608. Store the two-dimensional barcode, and give a prompt "Please continue to input a different two-dimensional barcode in this group." Go back to step 600.

609. Splice the information data in this group of two-dimensional barcodes according to the sequence number. Go back to step 603.

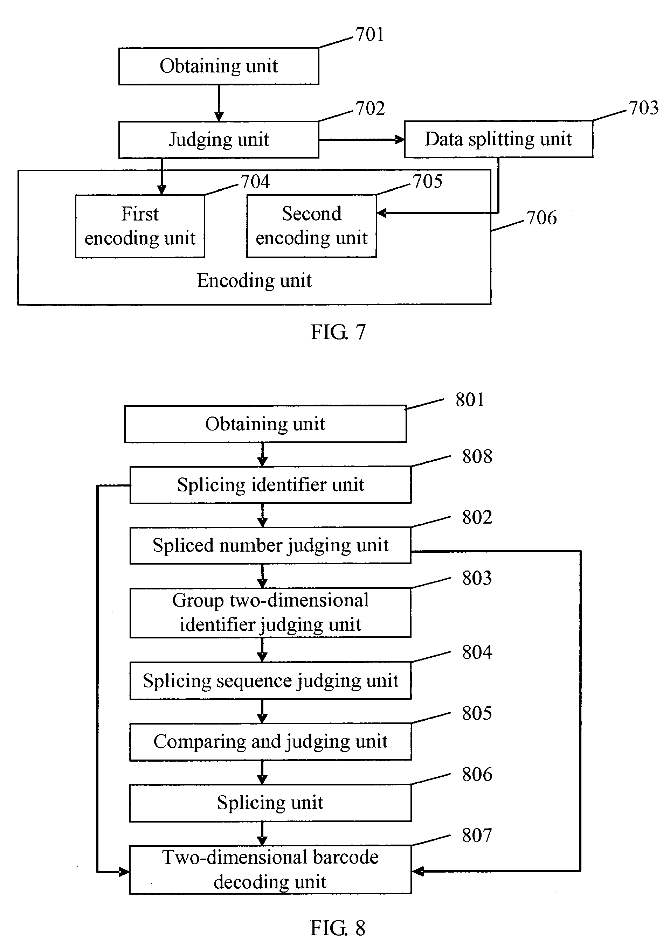

As shown in FIG. 7, an apparatus for encoding two-dimensional barcodes in the second embodiment of the present invention includes:
an obtaining unit 701, adapted to obtain upper-layer application data; and
a two-dimensional barcode encoding unit 706, adapted to encode the upper-layer application data to two-dimensional barcodes that include a splicer area and an information data area.

The apparatus may further include:
a judging unit 702, adapted to judge whether the size of the application data exceeds the corresponding two-dimensional barcode capacity of the data ready for encoding, whereupon a data splitting unit 703 splits the data if the size of the data exceeds the capacity, or the two-dimensional barcode encoding unit 706 performs two-dimensional barcode encoding for the application data directly if the size of the data does not exceed the capacity; and
the data splitting unit 703, adapted to: split the application data to fragments, sort the fragments and provide them to the two-dimensional barcode encoding unit for encoding if the judging unit 702 determines that the size of the application data exceeds the corresponding two-dimensional barcode capacity of the data ready for encoding.

The two-dimensional barcode encoding unit 706 may include:
a first encoding unit 704, adapted to perform two-dimensional barcode encoding for the data ready for encoding directly if the judging unit 702 determines that the size of the application data does not exceed the corresponding two-dimensional barcode capacity of the data ready for encoding, where the two-dimensional barcode encoding for the application data directly is: setting the spliced number identifier to 1, filling the group two-dimensional barcode identifier with fill characters or setting it to a certain value, filling the splicing sequence with fill characters or setting it to 1, and filling the information data area with the data ready for encoding to generate the two-dimensional barcodes; and
a second encoding unit 705, adapted to perform two-dimensional barcode encoding for data fragments if the judging unit 702 determines that the size of the application data exceeds the corresponding two-dimensional barcode capacity of the data ready for encoding, where the two-dimensional barcode encoding for the data fragments is: setting the spliced number identifier to the number of the fragments, setting the splicing sequence to the sequence number, setting the group two-dimensional barcode identifier of the same group of two-dimensional barcodes to the same number, and filling the information data area of each two-dimensional barcode with the data fragment respectively.

As shown in FIG. 8, an apparatus for decoding two-dimensional barcodes in the second embodiment of the present invention includes:
an obtaining unit 801, adapted to obtain two-dimensional barcodes that include a splicer area and an information data area; and
a two-dimensional barcode decoding unit 807, adapted to: decode the two-dimensional barcodes to upper-layer application data, and provide the upper-layer application data to an upper-layer application of the two-dimensional barcodes.

The apparatus may further include:
a spliced number judging unit 802, adapted to judge the number of spliced two-dimensional barcodes obtained by the obtaining unit 801, and provide the two-dimensional barcodes to the two-dimensional barcode decoding unit if the number is equal to 1;
a group two-dimensional barcode identifier judging unit 803, adapted to judge whether the group two-dimensional barcode identifier of the obtained two-dimensional barcode is the same as that of a decoded two-dimensional barcode if the spliced number judging unit 802 determines that the number of spliced barcodes is greater than 1;
a splicing sequence judging unit 804, adapted to judge whether the sequence number in the splicing sequence of the obtained two-dimensional barcode is the same as that of the decoded two-dimensional barcode if the group two-dimensional barcode identifier judging unit 803 determines that the group two-dimensional barcode identifier of the obtained two-dimensional barcode is the same as that of the decoded two-dimensional barcode;
a comparing and judging unit 805, adapted to: add 1 to the number of pre-stored two-dimensional barcodes of the same group two-dimensional barcode identifier to obtain a sum, and compare the sum with the number of spliced barcodes if the splicing sequence judging unit 804 determines that no two-dimensional barcode of the same splicing sequence is received; and
a splicing unit 806, adapted to: splice the information data in this group of two-dimensional barcodes according to the sequence number if the comparing and judging unit 805 determines that the sum is equal to the number of spliced barcodes, and provide the information data to the two-dimensional barcode decoding unit.

The apparatus may further include:
a splicing identifier unit 808, adapted to: judge the value of the splicing identifier, and provide the two-dimensional barcodes to the spliced number judging unit 802 if the value of the splicing identifier is determined as 1, or provide the two-dimensional barcodes to the two-dimensional barcode decoding unit 807 if the value of the splicing identifier is determined as 0.

### Embodiment 3

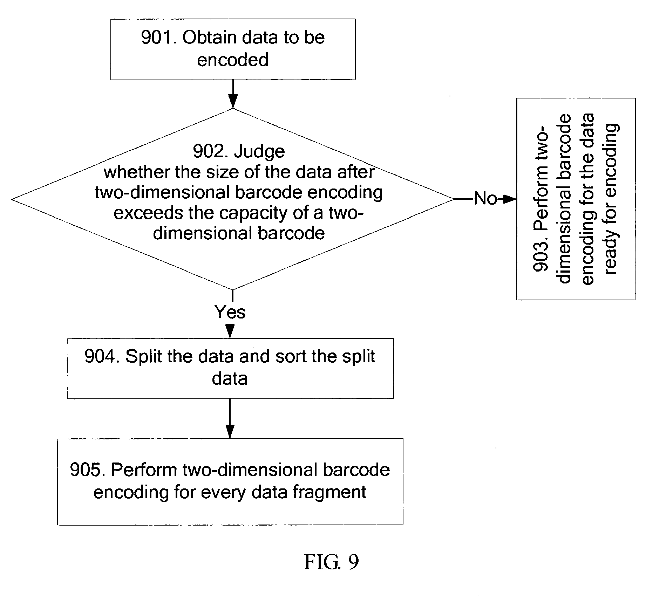

As shown in FIG. 9, a method for encoding two-dimensional barcodes in the third embodiment includes the following steps:

The following process is an example of the method for generating two-dimensional barcodes:

901. Obtain data to be encoded.

902. Judge whether the size of the data after two-dimensional barcode encoding exceeds the capacity of a two-dimensional barcode. If not, proceed to step 903; if so, go to step 904.

After encoding, the two-dimensional barcode includes a splicer area and an information data area. Once the encoding mode is determined, the additional size derived from the encoding (such as the splicer area) is determined, and the size of the data after it is encoded to a two-dimensional barcode can be calculated out beforehand. The information capacity of each two-dimensional barcode is equal to the size of the splicer area plus the size of the information data area. That is, in a group of two-dimensional barcodes derived from encoding, each two-dimensional barcode fulfills the following condition: Size of information data area = Information capacity of each two-dimensional barcode - Size of splicer area.

903. Perform two-dimensional barcode encoding for the data ready for encoding.

The generated two-dimensional barcode includes a group two-dimensional barcode identifier, a splicing sequence, and a subsequent number identifier.

The group two-dimensional barcode identifier identifies a group of two-dimensional barcodes that need to be spliced; the same group of two-dimensional spliced barcodes has the same group two-dimensional barcode identifier; for example, the identifier is a value in 0-65535.

The splicing sequence indicates the position of this two-dimensional barcode in the spliced application data; for example, an octet is used to indicate the splicing sequence. 256 values in 0-255 can identify 255 two-dimensional barcodes except an all-zero value.

The subsequent number identifier identifies the subsequent number of barcodes, which is obtained by subtracting the sequence number of this spliced barcode from the total number of spliced two-dimensional barcodes of the application data (Subsequent number of barcodes = Total number of barcodes - Sequence number of this barcode); for example, an octet is used to identify the number of barcodes, and 256 values in 0-255 can identify 255 two-dimensional barcodes except an all-zero value. If the application data is split to 10 two-dimensional barcodes and the sequence number of this barcode is 4, the subsequent number of barcodes is 6.

The two-dimensional barcodes are composed of a splicer area and an information data area: The splicer area may be composed of a group two-dimensional barcode identifier, a splicing sequence, and the subsequent number of barcodes; and the information data area may be made up in the decoded two-dimensional barcode encoding mode.

The subsequent number identifier is set to 0; the group two-dimensional barcode identifier and the splicing sequence are filled with fill characters; and the information data area is filled with the data ready for encoding to generate the two-dimensional barcodes. Exit.

904. Split and sort data. The capacity of each two-dimensional barcode is equal to the size of the splicer area plus the size of the information data area. That is, in a group of two-dimensional barcodes derived from encoding, each two-dimensional barcode fulfills the following condition: Size of information data area = Capacity of each two-dimensional barcode - Size of splicer area. Therefore, at the time of splitting data, the data to be encoded is fragmented based on the size of the information data area, and a sequence number is allocated to each fragment sequentially.

905. Perform two-dimensional barcode encoding for every data fragment.

The generated two-dimensional barcode includes a group two-dimensional barcode identifier, a splicing sequence, and a subsequent number identifier.

The group two-dimensional barcode identifier identifies a group of two-dimensional barcodes that need to be spliced; the same group of two-dimensional spliced barcodes has the same group two-dimensional barcode identifier; for example, the identifier is a value in 0-65535.

The splicing sequence indicates the position of this two-dimensional barcode in the spliced application data; for example, an octet is used to indicate the splicing sequence. 256 values in 0-255 can identify 255 two-dimensional barcodes except an all-zero value.

The subsequent number identifier identifies the subsequent number of barcodes, which is obtained by subtracting the sequence number of this spliced barcode from the total number of spliced two-dimensional barcodes of the application data (Subsequent number of barcodes = Total number of barcodes - Sequence number of this barcode); for example, an octet is used to identify the number of barcodes, and 256 values in 0-255 can identify 255 two-dimensional barcodes except an all-zero value. If the application data is split to 10 two-dimensional barcodes and the sequence number of this barcode is 4, the subsequent number of barcodes is 6.

More specifically, the splicing sequence is equal to the sequence number; the subsequent number of barcodes is equal to the total number of barcodes minus the sequence number of this spliced barcode; and the group two-dimensional barcode identifier of the group is set to the same number; the information data area of each two-dimensional barcode is filled with the data fragment respectively (in the last fragment, if the metadata is smaller than the size of the information data area, fill bits may be applied). In this way, a group of two-dimensional barcodes is generated.

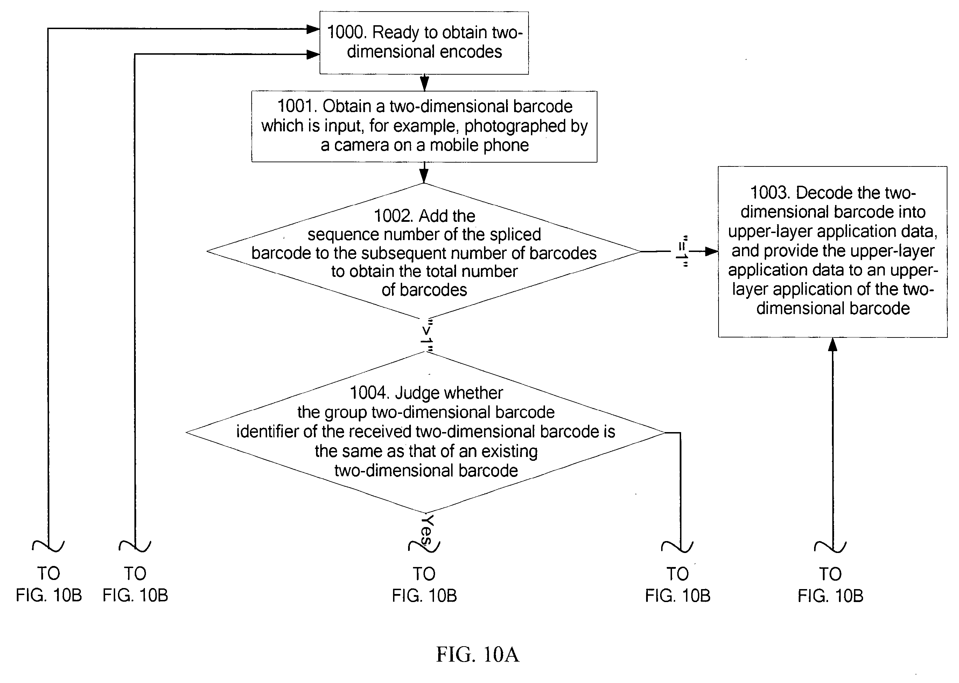

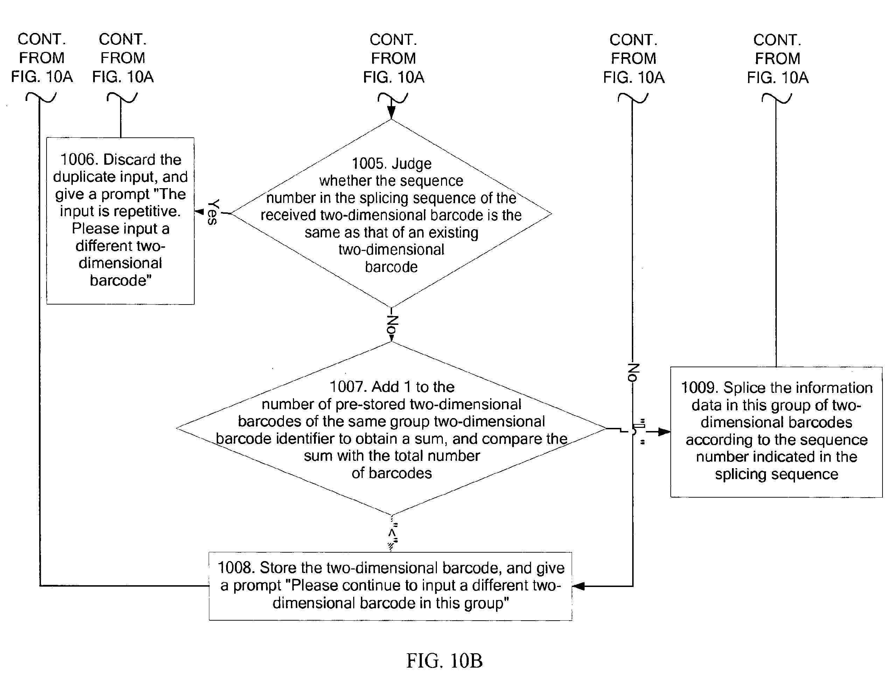

As shown in FIG. 10, a method for decoding two-dimensional barcodes in the third embodiment includes the following steps:

1000. Be ready to obtain two-dimensional barcodes.

1001. Obtain a two-dimensional barcode which is input, for example, photographed by a camera on a mobile phone.

1002. Add the sequence number of the spliced barcode to the subsequent number of barcodes to obtain the total number of barcodes. If the total number of barcodes is equal to 1, proceed to step 1003; if the total number of barcodes is greater than 1, go to step 1004.

1003. Decode the two-dimensional barcode to upper-layer application data, and provide the upper-layer application data to an upper-layer application of the two-dimensional barcode. Exit.

1004. Judge whether the group two-dimensional barcode identifier of the obtained two-dimensional barcode is the same as that of a decoded two-dimensional barcode. If so, proceed to step 1005; if not, go to step 1008.

1005. Judge whether the sequence number in the splicing sequence of the obtained two-dimensional barcode is the same as that of a decoded two-dimensional barcode. If so, proceed to step 1006; if not, go to step 1007.

1006. Discard the duplicate input, and give a prompt "The input is repetitive. Please input a different two-dimensional barcode." Go back to step 1000.

1007. Add 1 to the number of pre-stored two-dimensional barcodes of the same group two-dimensional barcode identifier to obtain a sum, and compare the sum with the total number of barcodes. If the sum is less than the total number of barcodes, proceed to step 1008; if the sum is equal to the total number of barcodes, go to step 1009.

1008. Give a prompt "Please continue to input a different two-dimensional barcode in this group." Go back to step 1000.

1009. Splice the information data in this group of two-dimensional barcodes according to the sequence number. Go back to step 1003.

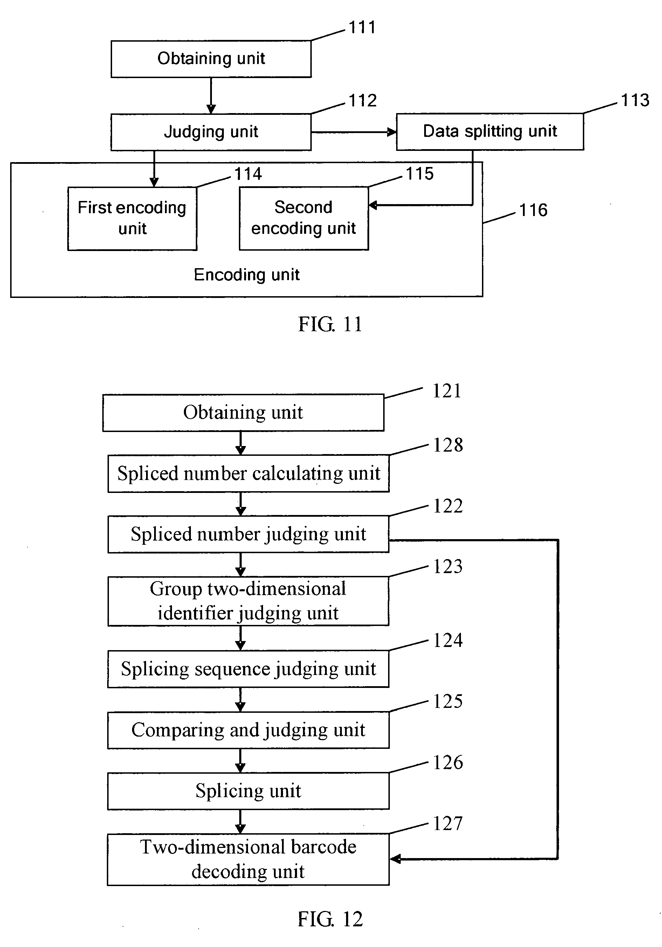

As shown in FIG. 11, an apparatus for encoding two-dimensional barcodes in this embodiment includes:
an obtaining unit 111, adapted to obtain the data ready for encoding; and
a two-dimensional barcode encoding unit 116, adapted to encode the upper-layer application data to two-dimensional barcodes that include a splicer area and an information data area.

The apparatus may further include:
a judging unit 112, adapted to judge whether the size of the application data exceeds the corresponding two-dimensional barcode capacity of the data ready for encoding, whereupon a data splitting unit 113 splits the data if the size of the data exceeds the capacity, or the two-dimensional barcode encoding unit 116 performs two-dimensional barcode encoding for the application data directly if the size of the data does not exceed the capacity; and
the data splitting unit 113, adapted to: split the data ready for encoding to data fragments, sort the fragments and provide them to the two-dimensional barcode encoding unit 116 for encoding if the judging unit 112 determines that the size of the data ready for encoding exceeds the corresponding two-dimensional barcode capacity of the data ready for encoding.

The two-dimensional barcode encoding unit 116 may include:
a first encoding unit 114, adapted to perform two-dimensional barcode encoding for the data ready for encoding directly if the judging unit 112 determines that the size of the data ready for encoding does not exceed the corresponding two-dimensional barcode capacity of the data ready for encoding, where the two-dimensional barcode encoding for the data ready for encoding directly is: setting the spliced number identifier to 1, filling the group two-dimensional barcode identifier with fill characters or setting it to a certain value, filling the splicing sequence with fill characters or setting it to 1, and filling the information data area with the data ready for encoding to generate the two-dimensional barcodes; and
a second encoding unit 115, adapted to perform two-dimensional barcode encoding for data fragments if the judging unit 112 determines that the size of the data ready for encoding exceeds the corresponding two-dimensional barcode capacity of the data ready for encoding, where the two-dimensional barcode encoding for the data fragments is: setting the spliced number identifier to the number of the fragments, setting the splicing sequence to the sequence number, setting the group two-dimensional barcode identifier of the same group of two-dimensional barcodes to the same number, and filling the information data area of each two-dimensional barcode with the data fragment respectively.

The first encoding unit 114 is further adapted to calculate the subsequent number of barcodes.

The second encoding unit 115 is further adapted to set the subsequent number identifier to 0.

As shown in FIG. 12, an apparatus for decoding two-dimensional barcodes in the third embodiment of the present invention includes:
an obtaining unit 121, adapted to obtain two-dimensional barcodes; and
a two-dimensional barcode decoding unit 127, adapted to: decode the two-dimensional barcodes to upper-layer application data, and provide the upper-layer application data to an upper-layer application of the two-dimensional barcodes.

The apparatus may further include:
a spliced number judging unit 122, adapted to judge the number of spliced two-dimensional barcodes obtained by the obtaining unit 121, and provide the two-dimensional barcodes to the application data providing unit if the number of spliced barcodes is equal to 1;
a group two-dimensional barcode identifier judging unit 123, adapted to judge whether the group two-dimensional barcode identifier of the obtained two-dimensional barcode is the same as that of a decoded two-dimensional barcode if the spliced number judging unit 122 determines that the number of spliced barcodes is greater than 1;
a splicing sequence judging unit 124, adapted to judge whether the sequence number in the splicing sequence of the obtained two-dimensional barcode is the same as that of the decoded two-dimensional barcode if the group two-dimensional barcode identifier judging unit 123 determines that the group two-dimensional barcode identifier of the obtained two-dimensional barcode is the same as that of the decoded two-dimensional barcode;
a comparing and judging unit 125, adapted to: add 1 to the number of pre-stored two-dimensional barcodes of the same group two-dimensional barcode identifier to obtain a sum, and compare the sum with the number of spliced barcodes if the splicing sequence judging unit 124 determines that no two-dimensional barcode of the same splicing sequence is received; and
a splicing unit 126, adapted to: splice the information data in this group of two-dimensional barcodes according to the sequence number if the comparing and judging unit 125 determines that the sum is equal to the number of spliced barcodes, and provide the information data to the two-dimensional barcode decoding unit.

The apparatus may further include:
a spliced number calculating unit 128, adapted to: add the subsequent number of barcodes to the sequence number of a spliced barcode to obtain the total number of spliced barcodes, and provide the total number to the spliced number judging unit 122.

### Embodiment 4

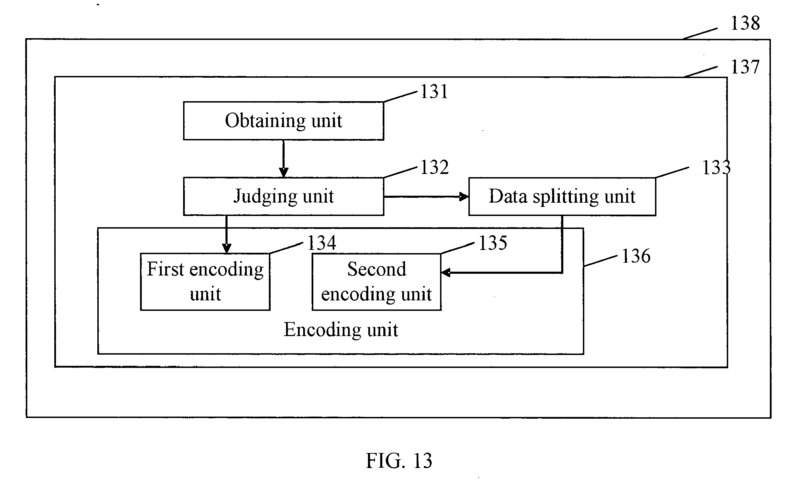

A terminal 138 is provided in the fourth embodiment of the present invention. As shown in FIG. 13, the terminal 138 includes an encoding apparatus 137. The encoding apparatus 137 includes:
an obtaining unit 131, adapted to obtain upper-layer application data; and
a two-dimensional barcode encoding unit 136, adapted to encode the upper-layer application data to two-dimensional barcodes that include a splicer area and an information data area.

The encoding apparatus 137 further includes:
a judging unit 132, adapted to judge whether the size of the application data exceeds the corresponding two-dimensional barcode capacity of the upper-layer application data, whereupon a data splitting unit 133 splits the data if the size of the data exceeds the capacity, or the two-dimensional barcode encoding unit performs two-dimensional barcode encoding for the application data directly if the size of the data does not exceed the capacity; and
the data splitting unit 133, adapted to: split the application data to data fragments, sort the fragments and provide them to the two-dimensional barcode encoding unit 136 for encoding if the judging unit 132 determines that the size of the application data exceeds the corresponding two-dimensional barcode capacity of the upper-layer application data.

The two-dimensional barcode encoding unit 136 includes:
a first encoding unit 134, adapted to perform two-dimensional barcode encoding for the application data directly if the judging unit 132 determines that the size of the application data after encoding does not exceed the corresponding two-dimensional barcode capacity of the upper-layer application data, where the two-dimensional barcode encoding for the application data directly is: setting the spliced number identifier to 1, filling the group two-dimensional barcode identifier with fill characters or setting it to a certain value, filling the splicing sequence with fill characters or setting it to 1, and filling the information data area with the upper-layer application data to generate the two-dimensional barcodes; and
a second encoding unit 135, adapted to perform two-dimensional barcode encoding for data fragments if the judging unit 132 determines that the size of the application data after encoding exceeds the corresponding two-dimensional barcode capacity of the upper-layer application data, where the two-dimensional barcode encoding for the data fragments is: setting the spliced number identifier to the number of the fragments, setting the splicing sequence to the sequence number allocated to the data fragment, setting the group two-dimensional barcode identifier of the same group of two-dimensional barcodes to the same number, and filling the information data area of each two-dimensional barcode with the data fragment respectively.

The first encoding unit 134 is further adapted to set the splicing identifier to 0 if the judging unit 132 determines that the size of the application data after encoding does not exceed the corresponding two-dimensional barcode capacity of the upper-layer application data.

The second encoding unit 135 is further adapted to set the splicing identifier to 1 if the judging unit 132 determines that the size of the application data after encoding exceeds the corresponding two-dimensional barcode capacity of the upper-layer application data.

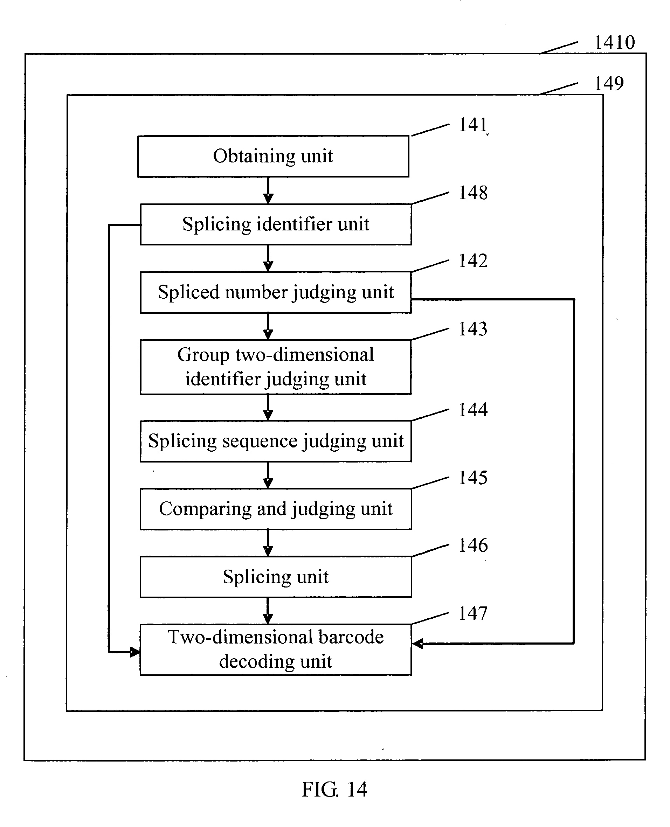

A terminal 1410 is provided in the fourth embodiment of the present invention. As shown in FIG. 14, the terminal 1410 includes a decoding apparatus 149. The decoding apparatus 149 includes:
an obtaining unit 141, adapted to obtain two-dimensional barcodes that include a splicer area and an information data area; and
a two-dimensional barcode decoding unit 147, adapted to: decode the two-dimensional barcodes to upper-layer application data, and provide the upper-layer application data to an upper-layer application of the two-dimensional barcodes.

The decoding apparatus 149 further includes:
a spliced number judging unit 142, adapted to judge the number of spliced two-dimensional barcodes obtained by the obtaining unit 141, and provide the two-dimensional barcodes to the two-dimensional barcode decoding unit 147 if the number of spliced two-dimensional barcodes is equal to 1;
a group two-dimensional barcode identifier judging unit 143, adapted to judge whether the group two-dimensional barcode identifier of the obtained two-dimensional barcode is the same as that of a decoded two-dimensional barcode if the spliced number judging unit 142 determines that the number of spliced barcodes is greater than 1;
a splicing sequence judging unit 144, adapted to judge whether the sequence number in the splicing sequence of the obtained two-dimensional barcode is the same as that of the decoded two-dimensional barcode if the group two-dimensional barcode identifier judging unit 143 determines that the group two-dimensional barcode identifier of the obtained two-dimensional barcode is the same as that of the decoded two-dimensional barcode;
a comparing and judging unit 145, adapted to: add 1 to the number of pre-stored two-dimensional barcodes of the same group two-dimensional barcode identifier to obtain a sum, and compare the sum with the number of spliced barcodes if the splicing sequence judging unit 144 determines that no two-dimensional barcode of the same splicing sequence is received; and
a splicing unit 146, adapted to: splice the information data in this group of two-dimensional barcodes according to the sequence number if the comparing and judging unit 145 determines that the sum is equal to the number of spliced barcodes, and provide the information data to the two-dimensional barcode decoding unit 147.

The decoding apparatus 149 may further include:
a splicing identifier unit 148, adapted to: judge the value of the splicing identifier, and provide the two-dimensional barcodes to the spliced number judging unit 142 if the value of the splicing identifier is determined as 1, or provide the two-dimensional barcodes to the two-dimensional barcode decoding unit 147 if the value of the splicing identifier is determined as 0.

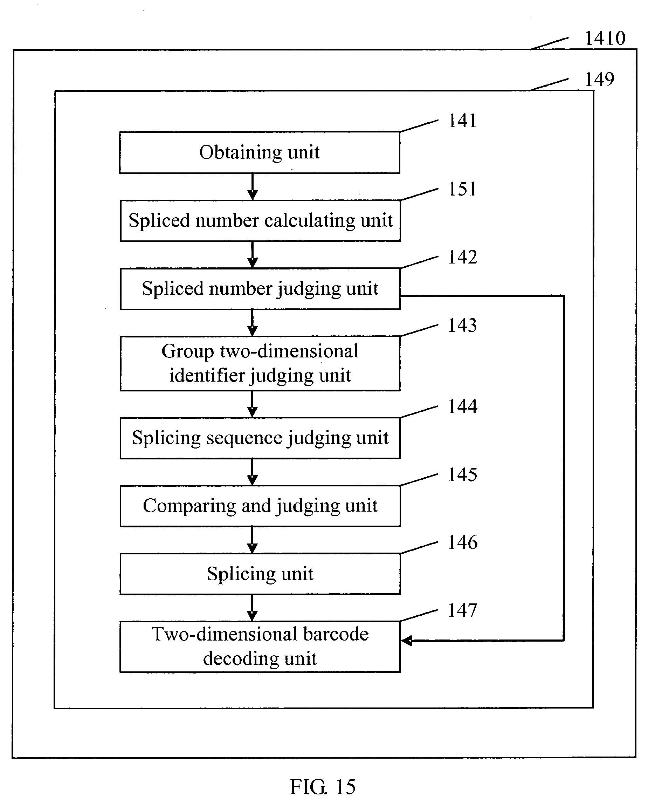

The fourth embodiment further provides a terminal 1410. As shown in FIG. 15, the terminal 1410 includes a decoding apparatus 149. The decoding apparatus 149 includes:
an obtaining unit 131, adapted to obtain two-dimensional barcodes that include a splicer area and an information data area; and
a two-dimensional barcode decoding unit 147, adapted to: decode the two-dimensional barcodes to upper-layer application data, and provide the upper-layer application data to an upper-layer application of the two-dimensional barcodes.

The decoding apparatus 149 further includes:
a spliced number judging unit 142, adapted to judge the number of spliced two-dimensional barcodes obtained by the obtaining unit, and provide the two-dimensional barcodes to the two-dimensional barcode decoding unit 147 if the number is equal to 1;
a group two-dimensional barcode identifier judging unit 143, adapted to judge whether the group two-dimensional barcode identifier of the obtained two-dimensional barcode is the same as that of a decoded two-dimensional barcode if the spliced number judging unit 142 determines that the number of spliced barcodes is greater than 1;
a splicing sequence judging unit 144, adapted to judge whether the sequence number in the splicing sequence of the obtained two-dimensional barcode is the same as that of the decoded two-dimensional barcode if the group two-dimensional barcode identifier judging unit 143 determines that the group two-dimensional barcode identifier of the obtained two-dimensional barcode is the same as that of the decoded two-dimensional barcode; and
a comparing and judging unit 145, adapted to: add 1 to the number of pre-stored two-dimensional barcodes of the same group two-dimensional barcode identifier to obtain a sum, and compare the sum with the number of spliced barcodes if the splicing sequence judging unit 144 determines that no two-dimensional barcode of the same splicing sequence is received.

The decoding apparatus 149 further includes:
a spliced number calculating unit 151, adapted to: add the subsequent number of barcodes to the sequence number of a spliced barcode to obtain the total number of spliced barcodes, and provide the total number to the spliced number judging unit 142.

In the foregoing embodiments, all examples are exemplary only, for example, "splicing identifier" = 0|1; the group two-dimensional barcode identifier is a value in 0-65535; an octet in 0-255 is used to identify the splicing sequence, which shall not be construed as limitations to the present invention.

## Claims

1. A method for encoding two-dimensional barcodes, comprising:
obtaining application data to be encoded (101); and
encoding the data to be encoded to form two-dimensional barcodes that comprise a splicer area and an information data area;
wherein after obtaining the data to be encoded, the method further comprises:
judging whether the size of data after encoding exceeds corresponding two-dimensional barcode capacity of the data to be encoded (102); if so, splitting the data to form data fragments and sorting the data fragments (104), wherein the two-dimensional barcode encoding for the data to be encoded is two-dimensional barcode encoding for the data fragments (105); if not, the two-dimensional barcode encoding for the data to be encoded is two-dimensional barcode encoding for the application data directly (103);
wherein:
the splicer area comprises a spliced number identifier, a group two-dimensional barcode identifier and a splicing sequence; and
when the data to be encoded is split, the data to be encoded is fragmented based on the size of the information data area, and a sequence number is allocated to each fragment sequentially; the two-dimensional barcode encoding for the data fragments involves: setting the spliced number identifier to the number of the fragments, setting the splicing sequence to the allocated sequence number, setting the group two-dimensional barcode identifier of the same group of two-dimensional barcodes to a same number, and filling the information data area of each two-dimensional barcode with the data fragment respectively;
wherein the group two-dimensional barcode identifier identifies a group of two-dimensional barcodes that need to be spliced and the same group of two-dimensional barcodes for splicing has the same group two-dimensional barcode identifier; the spliced number identifier indicates the number of spliced two-dimensional barcodes resulting from splitting the data to be encoded; and the splicing sequence indicates the position of this two-dimensional barcode in the spliced data to be encoded.

2. The method according to claim 1, wherein:
the two-dimensional barcode encoding for the application data directly is: setting the spliced number identifier to 1, filling the information data area with the data to be encoded, and generating the two-dimensional barcodes (103).

3. The method according to claim 1, wherein:
the splicer area further comprises a splicing identifier; and
when the data to be encoded is split, the data to be encoded is fragmented based on the size of the information data area, and a sequence number is allocated to each fragment sequentially; the two-dimensional barcode encoding for the data fragments is: setting the splicing identifier to 1, setting the spliced number identifier to the number of the fragments, setting the splicing sequence to the allocated sequence number, setting a group two-dimensional barcode identifier to a same number, and filling the information data area of each two-dimensional barcode with the data fragment respectively.

4. The method according to claim 1, wherein:
the splicer area further comprises a splicing identifier; and
the two-dimensional barcode encoding for the application data directly is: setting the splicing identifier to 0, and filling the information data area with the data to be encoded.

5. A method for encoding two-dimensional barcodes, comprising:
obtaining application data to be encoded (901) ; and
encoding the data to be encoded to form two-dimensional barcodes that comprise a splicer area and an information data area; wherein after obtaining the application data, the method further comprises:
judging whether the size of data after encoding exceeds corresponding two-dimensional barcode capacity of the data to be encoded (902) ; if so, splitting the data to form data fragments and sorting the data fragments (904), wherein the two-dimensional barcode encoding for the data to be encoded is two-dimensional barcode encoding for the data fragments (905) ; if not, the two-dimensional barcode encoding for the data to be encoded is two-dimensional barcode encoding for the application data directly (903);
wherein the splicer area comprises a group two-dimensional barcode identifier, a subsequent number identifier, and a splicing sequence, the group two-dimensional barcode identifier identifies a group of two-dimensional barcodes that need to be spliced and the same group of two-dimensional barcodes for splicing has the same group two-dimensional barcode identifier; the splicing sequence indicates the position of this two-dimensional barcode in the spliced data to be encoded; and the subsequent number identifier identifies the subsequent number of barcodes, which subsequent number is obtained by subtracting the sequence number of this spliced barcode from the total number of spliced two-dimensional barcodes of the data to be encoded.

6. The method according to claim 5, wherein:
when the data to be encoded is split, the data to be encoded is fragmented based on the size of the information data area, and a sequence number is allocated to each fragment sequentially; the two-dimensional barcode encoding for the data fragments is: setting the splicing sequence to the allocated sequence number, calculating the subsequent number of barcodes, setting the group two-dimensional barcode identifier of the same group of two-dimensional barcodes to a same number, and filling the information data area of each two-dimensional barcode with the data fragment respectively.

7. The method according to claim 5, wherein:
the two-dimensional barcode encoding for the application data directly is: setting the subsequent number identifier to 0, and filling the information data area with data ready for encoding.

8. A method for decoding two-dimensional barcodes, comprising:
obtaining two-dimensional barcodes that comprise a splicer area and an information data area (201); and
decoding the two-dimensional barcodes to generate application data, and providing the application data to an upper-layer application of the two-dimensional barcodes (203);
wherein after obtaining the two-dimensional barcodes, the method further comprises:
judging the number of spliced barcodes (202) ; if the number of spliced barcodes is 1, decoding the two-dimensional barcodes to generate the application data, and providing the application data to the upper-layer application of the two-dimensional barcodes (203); if the number of spliced barcodes is greater than 1, judging whether the group two-dimensional barcode identifier of a obtained two-dimensional barcode is the same as that of a decoded two-dimensional barcode (204);
wherein the splicer area comprises a group two-dimensional barcode identifier, a spliced number identifier, and a splicing sequence; and
wherein the group two-dimensional barcode identifier identifies a group of two-dimensional barcodes that need to be spliced and the same group of two-dimensional barcodes for splicing has the same group two-dimensional barcode identifier; the spliced number identifier indicates the number of spliced two-dimensional barcodes resulting from splitting the data to be encoded; and the splicing sequence indicates the position of this two-dimensional barcode in the spliced data to be encoded.

9. The method according to claim 8, wherein:
after judging whether the group two-dimensional barcode identifier of the obtained two-dimensional barcode is the same as that of the decoded two-dimensional barcode, the method comprises: if the group two-dimensional barcode identifier of the obtained two-dimensional barcode is the same as that of the decoded two-dimensional barcode, judging whether a sequence number in the splicing sequence of the obtained two-dimensional barcode is the same as that of the decoded two-dimensional barcode (205) ; if no sequence number in the splicing sequence of the obtained two-dimensional barcode is the same as that of the decoded two-dimensional barcode, adding 1 to the number of pre-stored two-dimensional barcodes that have the same group two-dimensional barcode identifier to obtain a sum and comparing the sum with the number of spliced barcodes (207) ; if the sum is equal to the number of spliced barcodes, splicing information data in this group of two-dimensional barcodes according to the sequence number (209), decoding the two-dimensional barcodes to the application data, and providing the application data to the upper-layer application of the two-dimensional barcodes (203).

10. The method according to claim 8, wherein:
the splicer area further comprises a splicing identifier, and
after obtaining the two-dimensional barcodes, the method further comprises: judging the value of the splicing identifier (602) ; if the value of the splicing identifier is 1, judging whether the group two-dimensional barcode identifier of an obtained two-dimensional barcode is the same as that of a decoded two-dimensional barcode (604) ; if the value of the splicing identifier is 0, decoding the two-dimensional barcode to the application data, and providing the application data to the upper-layer application of the two-dimensional barcodes (603);
wherein the splicing identifier indicates whether the two-dimensional barcode needs splicing.

11. The method according to claim 10, wherein:
after judging whether the group two-dimensional barcode identifier of the obtained two-dimensional barcode is the same as that of the decoded two-dimensional barcode, the method comprises: if the group two-dimensional barcode identifier of the obtained two-dimensional barcode is the same as that of the decoded two-dimensional barcode, judging whether a sequence number in the splicing sequence of the obtained two-dimensional barcode is the same as that of the decoded two-dimensional barcode (605) ; if no sequence number in the splicing sequence of the obtained two-dimensional barcode is the same as that of the decoded two-dimensional barcode, adding 1 to the number of pre-stored two-dimensional barcodes that have the same group two-dimensional barcode identifier to obtain a sum and comparing the sum with the number of spliced barcodes (607).

12. The method according to claim 11, comprising:
if the sum is equal to the number of spliced barcodes, splicing information data in this group of two-dimensional barcodes according to the sequence number (609), decoding the two-dimensional barcodes to the application data, and providing the application data to the upper-layer application of the two-dimensional barcodes (603).

13. A method for decoding two-dimensional barcodes, comprising:
obtaining two-dimensional barcodes that comprise a splicer area and an information data area (1001); and
decoding the two-dimensional barcodes to generate application data, and providing the application data to an upper-layer application of the two-dimensional barcodes (1003);
wherein after obtaining the two-dimensional barcodes, the method further comprises: adding a subsequent number of barcodes to a sequence number of a spliced barcode to obtain a total number of spliced barcodes; judging the total number of spliced barcodes (1002) ; if the total number of spliced barcodes is equal to 1, decoding the two-dimensional barcode to generate the application data, and providing the application data to the upper-layer application of the two-dimensional barcodes (1003); if the total number of spliced barcodes is greater than 1, judging whether the group two-dimensional barcode identifier of the obtained two-dimensional barcode is the same as that of a decoded two-dimensional barcode (1004);
wherein the splicer area comprises a group two-dimensional barcode identifier, a subsequent number identifier, and a splicing sequence; and
wherein the group two-dimensional barcode identifier identifies a group of two-dimensional barcodes that need to be spliced and the same group of two-dimensional barcodes for splicing has the same group two-dimensional barcode identifier; the splicing sequence indicates the position of this two-dimensional barcode in the spliced data to be encoded; and the subsequent number identifier identifies the subsequent number of barcodes, which subsequent number is obtained by subtracting the sequence number of this spliced barcode from the total number of spliced two-dimensional barcodes of the data to be encoded.

14. The method according to claim 13, wherein:
after judging whether the group two-dimensional barcode identifier of the obtained two-dimensional barcode is the same as that of the decoded two-dimensional barcode, the method comprises: if the group two-dimensional barcode identifier of the obtained two-dimensional barcode is the same as that of the decoded two-dimensional barcode, judging whether a sequence number in the splicing sequence of the obtained two-dimensional barcode is the same as that of the decoded two-dimensional barcode (1005) ; if no sequence number in the splicing sequence of the obtained two-dimensional barcode is the same as that of the decoded two-dimensional barcode, adding 1 to the number of pre-stored two-dimensional barcodes that have the same group two-dimensional barcode identifier to obtain a sum, and comparing the sum with the number of spliced barcodes (1007).

15. The method according to claim 14, wherein:
after comparing the sum with the number of spliced barcodes, the method comprises: if the sum is equal to the number of spliced barcodes, splicing information data in this group of two-dimensional barcodes according to the sequence number, decoding the two-dimensional barcodes to the application data, and providing the application data to the upper-layer application of the two-dimensional barcodes (1003).

16. An encoding apparatus, comprising means for implementing the method for encoding two-dimensional barcodes according to any one claims 1-7.

17. A decoding apparatus, comprising means for implementing the method for decoding two-dimensional barcodes according to any one of claims 8-15.

## Patentansprüche

1. Verfahren zum Codieren von zweidimensionalen Strichcodes, umfassend:
Erhalten von zu codierenden Anwendungsdaten (101); und
Codieren der zu codierenden Daten, um zweidimensionale Strichcodes zu bilden, die einen Splicer-Bereich und einen Informationsdatenbereich umfassen;
wobei nach dem Erhalten der zu codierenden Daten das Verfahren ferner Folgendes umfasst:
Beurteilen, ob die Größe der Daten nach der Codierung entsprechende zweidimensionale Strichcodekapazität der zu codierenden Daten übersteigt (102);
wenn dem so ist, Aufteilen der Daten, um Datenfragmente zu bilden, und Sortieren der Datenfragmente (104), wobei das Codieren des zweidimensionalen Strichcodes für die zu codierenden Daten Codierung des zweidimensionalen Strichcodes für die Datenfragmente ist (105); wenn nicht, ist die Codierung des zweidimensionalen Strichcodes für die zu codierenden Daten direkte Codierung des zweidimensionalen Strichcodes für die Anwendungsdaten (103);
wobei
der Splicer-Bereich eine Kennung der gesplicten Zahl, eine Gruppenkennung des zweidimensionalen Strichcodes und eine Splicing-Sequenz umfasst; und
wenn die zu codierenden Daten aufgeteilt werden, die zu codierenden Daten auf der Basis der Größe des Informationsdatenbereichs fragmentiert werden und eine Sequenznummer jedem Fragment sequenziell zugeteilt wird; wobei bei der Codierung des zweidimensionalen Strichcodes für die Datenfragmente Folgendes erfolgt: Setzen der Kennung der gesplicten Zahl auf die Anzahl der Fragmente, Setzen der Splicing-Sequenz auf die zugeteilte Sequenznummer, Setzen der Gruppenkennung des zweidimensionalen Strichcodes derselben Gruppe von zweidimensionalen Strichcodes auf eine selbe Zahl und Füllen des Informationsdatenbereichs jedes zweidimensionalen Strichcodes jeweils mit dem Datenfragment;
wobei die Gruppenkennung des zweidimensionalen Strichcodes eine Gruppe von zweidimensionalen Strichcodes identifiziert, die gesplict werden müssen, und dieselbe Gruppe von zweidimensionalen Strichcodes zum Splicen dieselbe Gruppenkennung des zweidimensionalen Strichcodes aufweist; die Kennung der gesplicten Zahl die Anzahl gesplicter zweidimensionaler Strichcodes angibt, die sich aus dem Aufteilen der zu codierenden Daten ergibt; und die Splicing-Sequenz die Position dieses zweidimensionalen Strichcodes in den zu codierenden gesplicten Daten angibt.

2. Verfahren nach Anspruch 1, wobei
die direkte Codierung des zweidimensionalen Strichcodes für die Anwendungsdaten Folgendes durchführt: Setzen der Kennung der gesplicten Zahl auf 1, Füllen des Informationsdatenbereichs mit den zu codierenden Daten und Erzeugen der zweidimensionalen Strichcodes (103).

3. Verfahren nach Anspruch 1, wobei
der Splicer-Bereich ferner eine Splicing-Kennung umfasst; und
wenn die zu codierenden Daten aufgeteilt werden, die zu codierenden Daten auf der Basis der Größe des Informationsdatenbereichs fragmentiert werden und eine Sequenznummer sequenziell jedem Fragment zugeteilt wird; die Codierung des zweidimensionalen Strichcodes für die Datenfragmente Folgendes durchführt: Setzen der Splicing-Kennung auf 1, Setzen der Kennung der gesplicten Zahl auf die Anzahl der Fragmente, Setzen der Splicing-Sequenz auf die zugeteilte Sequenznummer, Setzen einer Gruppenkennung des zweidimensionalen Strichcodes auf eine selbe Zahl und Füllen des Informationsdatenbereichs jedes zweidimensionalen Strichcodes jeweils mit dem Datenfragment.

4. Verfahren nach Anspruch 1, wobei
der Splicer-Bereich ferner eine Splicing-Kennung umfasst; und
die direkte Codierung des zweidimensionalen Strichcodes für die Anwendungsdaten Folgendes durchführt: Setzen der Splicing-Kennung auf 0 und Füllen des Informationsdatenbereichs mit den zu codierenden Daten.

5. Verfahren zum Codieren von zweidimensionalen Strichcodes, umfassend:
Erhalten von zu codierenden Anwendungsdaten (901); und
Codieren der zu codierenden Daten, um zweidimensionale Strichcodes zu bilden, die einen Splicer-Bereich und einen Informationsdatenbereich umfassen; wobei das Verfahren nach dem Erhalten der Anwendungsdaten ferner Folgendes umfasst:
Beurteilen, ob die Größe der Daten nach der Codierung entsprechende zweidimensionale Strichcodekapazität der zu codierenden Daten übersteigt (902);
wenn dem so ist, Aufteilen der Daten, um Datenfragmente zu bilden, und Sortieren der Datenfragmente (904), wobei die Codierung des zweidimensionalen Strichcodes für die zu codierenden Daten Codierung des zweidimensionalen Strichcodes für die Datenfragmente (905) ist; wenn nicht, ist die Codierung des zweidimensionalen Strichcodes für die zu codierenden Daten direkte Codierung des zweidimensionalen Strichcodes für die Anwendungsdaten (903);
wobei der Splicer-Bereich eine Gruppenkennung des zweidimensionalen Strichcodes, eine Kennung der nachfolgenden Zahl und eine Splicing-Sequenz umfasst, die Gruppenkennung des zweidimensionalen Strichcodes eine Gruppe von zweidimensionalen Strichcodes identifiziert, die gesplict werden müssen, und dieselbe Gruppe von zweidimensionalen Strichcodes zum Splicen dieselbe Gruppenkennung des zweidimensionalen Strichcodes aufweist; die Splicing-Sequenz die Position dieses zweidimensionalen Strichcodes in den zu codierenden gesplicten Daten angibt; und die Kennung der nachfolgenden Zahl die nachfolgende Zahl von Strichcodes identifiziert, wobei diese nachfolgende Zahl durch Subtrahieren der Sequenznummer dieses gesplicten Strichcodes von der Gesamtzahl gesplicter zweidimensionaler Strichcodes der zu codierenden Daten erhalten wird.

6. Verfahren nach Anspruch 5, wobei
wenn die zu codierenden Daten aufgeteilt werden, die zu codierenden Daten auf der Basis der Größe des Informationsdatenbereichs fragmentiert werden und eine Sequenznummer sequenziell jedem Fragment zugeteilt wird; die Codierung des zweidimensionalen Strichcodes für die Datenfragmente Folgendes durchführt: Setzen der Splicing-Sequenz auf die zugeteilte Sequenznummer, Berechnen der nachfolgenden Zahl von Strichcodes, Setzen der Gruppenkennung des zweidimensionalen Strichcodes derselben Gruppe von zweidimensionalen Strichcodes auf eine selbe Zahl und Füllen des Informationsdatenbereichs jedes zweidimensionalen Strichcodes jeweils mit dem Datenfragment.

7. Verfahren nach Anspruch 5, wobei
die direkte Codierung des zweidimensionalen Strichcodes für die Anwendungsdaten Folgendes durchführt: Setzen der Kennung der nachfolgenden Zahl auf 0 und Füllen des Informationsdatenbereichs mit Daten, die für Codierung bereit sind.

8. Verfahren zum Decodieren von zweidimensionalen Strichcodes, umfassend:
Erhalten von zweidimensionalen Strichcodes, die einen Splicer-Bereich und einen Informationsdatenbereich umfassen (201); und
Decodieren der zweidimensionalen Strichcodes, um Anwendungsdaten zu erzeugen, und Leiten der Anwendungsdaten zu einer Anwendung einer oberen Schicht der zweidimensionalen Strichcodes (203);
wobei das Verfahren nach dem Erhalten der zweidimensionalen Strichcodes ferner Folgendes umfasst:
Beurteilen der Anzahl gesplicter Strichcodes (202); wenn die Anzahl gesplicter Strichcodes 1 ist, Decodieren der zweidimensionalen Strichcodes, um die Anwendungsdaten zu erzeugen, und Leiten der Anwendungsdaten zu der Anwendung einer oberen Schicht der zweidimensionalen Strichcodes (203); wenn die Anzahl gesplicter Strichcodes größer als 1 ist, Beurteilen, ob die Gruppenkennung des zweidimensionalen Strichcodes eines erhaltenen zweidimensionalen Strichcodes dieselbe wie die eines decodierten zweidimensionalen Strichcodes ist (204);
wobei der Splicer-Bereich eine Gruppenkennung des zweidimensionalen Strichcodes, eine Kennung der gesplicten Zahl und eine Splicing-Sequenz umfasst; und
wobei die Gruppenkennung des zweidimensionalen Strichcodes eine Gruppe von zweidimensionalen Strichcodes identifiziert, die gesplict werden müssen, und dieselbe Gruppe von zweidimensionalen Strichcodes zum Splicen dieselbe Gruppenkennung des zweidimensionalen Strichcodes aufweist; die Kennung der gesplicten Zahl die Anzahl gesplicter zweidimensionaler Strichcodes angibt, die sich aus dem Aufteilen der zu codierenden Daten ergibt; und die Splicing-Sequenz die Position dieses zweidimensionalen Strichcodes in den zu codierenden gesplicten Daten angibt.

9. Verfahren nach Anspruch 8, wobei
das Verfahren nach dem Beurteilen, ob die Gruppenkennung des zweidimensionalen Strichcodes des erhaltenen zweidimensionalen Strichcodes dieselbe wie die des decodierten zweidimensionalen Strichcodes ist, ferner Folgendes umfasst: wenn die Gruppenkennung des zweidimensionalen Strichcodes des erhaltenen zweidimensionalen Strichcodes dieselbe wie die des decodierten zweidimensionalen Strichcodes ist, Beurteilen, ob eine Sequenznummer in der Splicing-Sequenz des erhaltenen zweidimensionalen Strichcodes dieselbe wie die des decodierten zweidimensionalen Strichcodes ist (205); wenn keine Sequenznummer in der Splicing-Sequenz des erhaltenen zweidimensionalen Strichcodes dieselbe wie die des decodierten zweidimensionalen Strichcodes ist, Addieren von 1 zu der Anzahl vorgespeicherter zweidimensionaler Strichcodes, die dieselbe Gruppenkennung des zweidimensionalen Strichcodes aufweisen, um eine Summe zu erhalten, und Vergleichen der Summe mit der Anzahl gesplicter Strichcodes (207); wenn die Summe gleich der Anzahl gesplicter Strichcodes ist, Splicen von Informationsdaten in dieser Gruppe von zweidimensionalen Strichcodes gemäß der Sequenznummer (209), Decodieren der zweidimensionalen Strichcodes zu den Anwendungsdaten und Leiten der Anwendungsdaten zu der Anwendung einer oberen Schicht der zweidimensionalen Strichcodes (203).

10. Verfahren nach Anspruch 8, wobei
der Splicing-Bereich ferner eine Splicing-Kennung umfasst und das Verfahren nach dem Erhalten der zweidimensionalen Strichcodes ferner Folgendes umfasst:
Beurteilen des Werts der Splicing-Kennung (602); wenn der Wert der Splicing-Kennung 1 ist, Beurteilen, ob die Gruppenkennung des zweidimensionalen Strichcodes eines erhaltenen zweidimensionalen Strichcodes dieselbe wie die eines decodierten zweidimensionalen Strichcodes ist (604); wenn der Wert der Splicing-Kennung 0 ist, Decodieren des zweidimensionalen Strichcodes zu den Anwendungsdaten und Leiten der Anwendungsdaten zu der Anwendung einer oberen Schicht der zweidimensionalen Strichcodes (603);
wobei die Splicing-Kennung angibt, ob der zweidimensionale Strichcode Splicing erfordert.

11. Verfahren nach Anspruch 10, wobei
das Verfahren nach dem Beurteilen, ob die Gruppenkennung des zweidimensionalen Strichcodes des erhaltenen zweidimensionalen Strichcodes dieselbe wie die des decodierten zweidimensionalen Strichcodes ist, ferner Folgendes umfasst: wenn die Gruppenkennung des zweidimensionalen Strichcodes des erhaltenen zweidimensionalen Strichcodes dieselbe wie die des decodierten zweidimensionalen Strichcodes ist, Beurteilen, ob eine Sequenznummer in der Splicing-Sequenz des erhaltenen zweidimensionalen Strichcodes dieselbe wie die des decodierten zweidimensionalen Strichcodes ist (605); wenn keine Sequenznummer in der Splicing-Sequenz des erhaltenen zweidimensionalen Strichcodes dieselbe wie die des decodierten zweidimensionalen Strichcodes ist, Addieren von 1 zu der Anzahl vorgespeicherter zweidimensionaler Strichcodes, die dieselbe Gruppenkennung des zweidimensionalen Strichcodes aufweisen, um eine Summe zu erhalten, und Vergleichen der Summe mit der Anzahl gesplicter Strichcodes (607).

12. Verfahren nach Anspruch 11, umfassend:
wenn die Summe gleich der Anzahl gesplicter Strichcodes ist, Splicen von Informationsdaten in dieser Gruppe von zweidimensionalen Strichcodes gemäß der Sequenznummer (609), Decodieren der zweidimensionalen Strichcodes zu den Anwendungsdaten und Leiten der Anwendungsdaten zu der Anwendung einer oberen Schicht der zweidimensionalen Strichcodes (603).

13. Verfahren zum Decodieren von zweidimensionalen Strichcodes, umfassend:
Erhalten von zweidimensionalen Strichcodes, die einen Splicer-Bereich und einen Informationsdatenbereich umfassen (1001); und
Decodieren der zweidimensionalen Strichcodes, um Anwendungsdaten zu erzeugen, und Leiten der Anwendungsdaten zu einer Anwendung einer oberen Schicht der zweidimensionalen Strichcodes (1003);
wobei das Verfahren nach dem Erhalten der zweidimensionalen Strichcodes ferner Folgendes umfasst: Addieren einer nachfolgenden Zahl von Strichcodes zu einer Sequenznummer eines gesplicten Strichcodes, um eine Gesamtzahl gesplicter Strichcodes zu erhalten; Beurteilen der Gesamtzahl gesplicter Strichcodes (1002);
wenn die Gesamtzahl gesplicter Strichcodes gleich 1 ist, Decodieren des zweidimensionalen Strichcodes, um die Anwendungsdaten zu erzeugen, und Leiten der Anwendungsdaten zu der Anwendung einer oberen Schicht der zweidimensionalen Strichcodes (1003); wenn die Gesamtzahl gesplicter Strichcodes größer als 1 ist, Beurteilen, ob die Gruppenkennung des zweidimensionalen Strichcodes des erhaltenen zweidimensionalen Strichcodes dieselbe wie die eines decodierten zweidimensionalen Strichcodes ist (1004);
wobei der Splicer-Bereich eine Gruppenkennung des zweidimensionalen Strichcodes, eine Kennung der nachfolgenden Zahl und eine Splicing-Sequenz umfasst; und
wobei die Gruppenkennung des zweidimensionalen Strichcodes eine Gruppe von zweidimensionalen Strichcodes identifiziert, die gesplict werden müssen, und dieselbe Gruppe von zweidimensionalen Strichcodes zum Splicen dieselbe Gruppenkennung des zweidimensionalen Strichcodes aufweist; die Splicing-Sequenz die Position dieses zweidimensionalen Strichcodes in den zu codierenden gesplicten Daten angibt; und die Kennung der nachfolgenden Zahl die nachfolgende Zahl von Strichcodes identifiziert, wobei diese nachfolgende Zahl durch Subtrahieren der Sequenznummer dieses gesplicten Strichcodes von der Gesamtzahl gesplicter zweidimensionaler Strichcodes der zu codierenden Daten erhalten wird.

14. Verfahren nach Anspruch 13, wobei
das Verfahren nach dem Beurteilen, ob die Gruppenkennung des zweidimensionalen Strichcodes des erhaltenen zweidimensionalen Strichcodes dieselbe wie die des decodierten zweidimensionalen Strichcodes ist, ferner Folgendes umfasst: wenn die Gruppenkennung des zweidimensionalen Strichcodes des erhaltenen zweidimensionalen Strichcodes dieselbe wie die des decodierten zweidimensionalen Strichcodes ist, Beurteilen, ob eine Sequenznummer in der Splicing-Sequenz des erhaltenen zweidimensionalen Strichcodes dieselbe wie die des decodierten zweidimensionalen Strichcodes ist (1005); wenn keine Sequenznummer in der Splicing-Sequenz des erhaltenen zweidimensionalen Strichcodes dieselbe wie die des decodierten zweidimensionalen Strichcodes ist, Addieren von 1 zu der Anzahl vorgespeicherter zweidimensionaler Strichcodes, die dieselbe Gruppenkennung des zweidimensionalen Strichcodes aufweisen, um eine Summe zu erhalten, und Vergleichen der Summe mit der Anzahl gesplicter Strichcodes (1007).

15. Verfahren nach Anspruch 14, wobei
das Verfahren nach dem Vergleichen der Summe mit der Anzahl gesplicter Strichcodes ferner Folgendes umfasst: wenn die Summe gleich der Anzahl gesplicter Strichcodes ist, Splicen von Informationsdaten in dieser Gruppe zweidimensionaler Strichcodes gemäß der Sequenznummer, Decodieren der zweidimensionalen Strichcodes zu den Anwendungsdaten und Leiten der Anwendungsdaten zu der Anwendung einer oberen Schicht der zweidimensionalen Strichcodes (1003).

16. Codierungsvorrichtung mit Mitteln zum Implementieren des Verfahrens zum Codieren von zweidimensionalen Strichcodes nach einem der Ansprüche 1-7.

17. Decodierungsvorrichtung mit Mitteln zum Implementieren des Verfahrens zum Decodieren von zweidimensionalen Strichcodes nach einem der Ansprüche 8-15.

## Revendications

1. Procédé pour coder des codes à barres bidimensionnels, comprenant les étapes suivantes :
obtenir des données d'application à coder (101) ; et
coder les données à coder pour former des codes à barres bidimensionnels qui comprennent une zone d'assembleur et une zone de données d'informations ;
où après avoir obtenu les données à coder, le procédé comprend en outre les étapes suivantes :
évaluer si la taille des données après codage excède la capacité de code à barres bidimensionnel correspondante des données à coder (102) ; le cas échéant, diviser les données pour former des fragments de données et trier les fragments de données (104), où le codage de code à barres bidimensionnel pour les données à coder est un codage de code à barres bidimensionnel pour les fragments de données (105) ; dans le cas contraire, le codage de code à barres bidimensionnel pour les données à coder est un codage direct de code à barres bidimensionnel pour les données d'application (103) ;
où :
la zone d'assembleur comprend un identificateur de nombre assemblé, un identificateur de code à barres bidimensionnel de groupe et une séquence d'assemblage ; et
lorsque les données à coder sont divisées, les données à coder sont fragmentées sur la base de la taille de la zone de données d'informations, et un nombre de séquence est attribué à chaque fragment de manière séquentielle ; le codage de code à barres bidimensionnel pour les fragments de données implique de : définir l'identificateur de nombre assemblé au nombre des fragments, définir la séquence d'assemblage au nombre de séquence attribué, définir l'identificateur de codes à barres bidimensionnels de groupe du même groupe de code à barres bidimensionnel à un même nombre, et remplir respectivement la zone de données d'informations de chaque code à barres bidimensionnel avec le fragment de données ;
où l'identificateur de code à barres bidimensionnel de groupe identifie un groupe de codes à barres bidimensionnels qui nécessitent d'être assemblés et le même groupe de codes à barres bidimensionnels pour assemblage a le même identificateur de code à barres bidimensionnel de groupe ; l'identificateur de nombre assemblé indique le nombre de codes à barres bidimensionnels assemblés résultant de la division des données à coder ; et la séquence d'assemblage indique la position de ce code à barres bidimensionnel dans les données à coder assemblées.

2. Procédé selon la revendication 1, dans lequel :
le codage direct de code à barres bidimensionnel pour les données d'application comprend les étapes consistant à : définir l'identificateur de nombre assemblé à 1, remplir la zone de données d'informations avec les données à coder, et générer les codes à barres bidimensionnels (103).

3. Procédé selon la revendication 1, dans lequel :
la zone d'assembleur comprend en outre un identificateur d'assemblage ; et
lorsque les données à coder sont divisées, les données à coder sont fragmentées sur la base de la taille de la zone de données d'informations, et un nombre de séquence est attribué à chaque fragment de manière séquentielle ; le codage de code à barres bidimensionnel pour les fragments de données comprend les étapes consistant à :
définir l'identificateur d'assemblage à 1, définir l'identificateur de nombre assemblé au nombre des fragments, définir la séquence d'assemblage au nombre de séquence attribué, définir un identificateur de code à barres bidimensionnel de groupe à un même nombre, et remplir respectivement la zone de données d'informations de chaque code à barres bidimensionnel avec le fragment de données.

4. Procédé selon la revendication 1, dans lequel :
la zone d'assembleur comprend en outre un identificateur d'assemblage ; et
le codage direct de code à barres bidimensionnel pour les données d'application comprend les étapes consistant à : définir l'identificateur d'assemblage à 0, et remplir la zone de données d'informations avec les données à coder.

5. Procédé pour coder des codes à barres bidimensionnels, comprenant les étapes suivantes :
obtenir des données d'application à coder (901) ; et
coder les données à coder pour former des codes à barres bidimensionnels qui comprennent une zone d'assembleur et une zone de données d'informations ; où après l'obtention des données d'application, le procédé comprend en outre les étapes suivantes :
évaluer si la taille des données après codage excède la capacité de code à barres bidimensionnel correspondante des données à coder (902) ; le cas échéant, diviser les données pour former des fragments de données et trier les fragments de données (904), où le codage de code à barres bidimensionnel pour les données à coder est un codage de code à barres bidimensionnel pour les fragments de données (905) ; dans le cas contraire, le codage de code à barres bidimensionnel pour les données à coder est un codage direct de code à barres bidimensionnel pour les données d'application (903) ;
où la zone d'assembleur comprend un identificateur de code à barres bidimensionnel de groupe, un identificateur de nombre subséquent, et une séquence d'assemblage, l'identificateur de code à barres bidimensionnel de groupe identifie un groupe de codes à barres bidimensionnels qui nécessitent d'être assemblés et le même groupe de codes à barres bidimensionnels pour assemblage a le même identificateur de code à barres bidimensionnel de groupe ; la séquence d'assemblage indique la position de ce code à barres bidimensionnel dans les données assemblées à coder ; et
l'identificateur de nombre subséquent identifie le nombre subséquent de codes à barres, lequel nombre subséquent est obtenu en soustrayant le nombre de séquence de ce code à barres assemblé du nombre total de codes à barres bidimensionnels assemblés des données à coder.

6. Procédé selon la revendication 5, dans lequel :
lorsque les données à coder sont divisées, les données à coder sont fragmentées sur la base de la taille de la zone de données d'informations, et un nombre de séquence est attribué à chaque fragment de manière séquentielle ; le codage de code à barres bidimensionnel pour les fragments de données comprend les étapes consistant à :
définir la séquence d'assemblage au nombre de séquence attribué, calculer le nombre subséquent des codes à barres, définir l'identificateur de code à barres bidimensionnel de groupe du même groupe de codes à barres bidimensionnels à un même nombre, et remplir respectivement la zone de données d'informations de chaque code à barres bidimensionnel avec le fragment de données.

7. Procédé selon la revendication 5, dans lequel :
le codage direct de code à barres bidimensionnel pour les données d'application comprend les étapes consistant à : définir l'identificateur de nombre subséquent à 0, et remplir la zone de données d'informations avec des données prêtes au codage.

8. Procédé pour décoder des codes à barres bidimensionnels, comprenant les étapes suivantes :
obtenir des codes à barres bidimensionnels qui comprennent une zone d'assembleur et une zone de données d'informations (201) ; et
décoder les codes à barres bidimensionnels pour générer des données d'application, et délivrer les données d'application à une application de couche supérieure des codes à barres bidimensionnels (203) ;
où après l'obtention des codes à barres bidimensionnels, le procédé comprend en outre les étapes suivantes :
évaluer le nombre de codes à barres assemblés (202) ; si le nombre de codes à barres assemblés est 1, décoder les codes à barres bidimensionnels pour générer les données d'application, et délivrer les données d'application à l'application de couche supérieure des codes à barres bidimensionnels (203), si le nombre de codes à barres assemblés est supérieur à 1, évaluer si l'identificateur de code à barres bidimensionnel de groupe d'un code à barres bidimensionnel obtenu est le même que celui d'un code à barres bidimensionnel décodé (204) ;
où la zone de l'assembleur comprend un identificateur de code à barres bidimensionnel de groupe, un identificateur de nombre assemblé, et une séquence d'assemblage ; et
où l'identificateur de code à barres bidimensionnel de groupe identifie un groupe de codes à barres bidimensionnels qui nécessitent d'être assemblés et le même groupe de codes à barres bidimensionnels pour assemblage a le même identificateur de code à barres bidimensionnel de groupe ; l'identificateur de nombre assemblé indique le nombre de codes à barres bidimensionnels assemblés résultant de la division des données à coder ; et la séquence d'assemblage indique la position de ce code à barres bidimensionnel dans les données assemblées à coder.

9. Procédé selon la revendication 8, dans lequel :
après avoir évalué si l'identificateur de code à barres bidimensionnel de groupe du code à barres bidimensionnel obtenu est le même que celui du code à barres bidimensionnel décodé, le procédé comprend les étapes suivantes : si l'identificateur de code à barres bidimensionnel de groupe du code à barres bidimensionnel obtenu est le même que celui du code à barres bidimensionnel décodé, évaluer si un nombre de séquence dans la séquence d'assemblage du code à barres bidimensionnel obtenu est le même que celui du code à barres bidimensionnel décodé (205) ; si aucun nombre de séquence dans la séquence d'assemblage du code à barres bidimensionnel obtenu n'est le même que celui du code à barres bidimensionnel décodé, ajouter 1 au nombre des codes à barres bidimensionnels pré-stockés qui ont le même identificateur de code à barres bidimensionnel de groupe pour obtenir une somme et comparer la somme avec le nombre de codes à barres assemblés (207) ; si la somme est égale au nombre de codes à barres assemblés, assembler des données d'informations dans ce groupe de codes à barres bidimensionnels selon le nombre de séquence (209), décoder les codes à barres bidimensionnels en les données d'application, et délivrer les données d'application à l'application de couche supérieure des codes à barres bidimensionnels (203).

10. Procédé selon la revendication 8, dans lequel :
la zone d'assembleur comprend en outre un identificateur d'assemblage, et
après obtention des codes à barres bidimensionnels, le procédé comprend en outre les étapes suivantes :
évaluer la valeur de l'identificateur d'assemblage (602) ; si la valeur de l'identificateur d'assemblage est 1, évaluer si l'identificateur de code à barres bidimensionnel de groupe d'un code à barres bidimensionnel obtenu est le même que celui d'un code à barres bidimensionnel décodé (604) ; si la valeur de l'identificateur d'assemblage est zéro, décoder le code à barres bidimensionnel en les données d'application, et délivrer les données d'application à l'application de couche supérieure des codes à barres bidimensionnels (603) ;
où l'identificateur d'assemblage indique si le code à barres bidimensionnel nécessite un assemblage.

11. Procédé selon la revendication 10, dans lequel :
après avoir évalué si l'identificateur de code à barres bidimensionnel de groupe du code à barres bidimensionnel obtenu est le même que celui du code à barres bidimensionnel décodé, le procédé comprend les étapes suivantes : si l'identificateur de code à barres bidimensionnel de groupe du code à barres bidimensionnel obtenu est le même que celui du code à barres bidimensionnel décodé, évaluer si un nombre de séquence dans la séquence d'assemblage du code à barres bidimensionnel obtenu est le même que celui du code à barres bidimensionnel décodé (605) ; si aucun nombre de séquence dans la séquence d'assemblage du code à barres bidimensionnel obtenu n'est le même que celui du code à barres bidimensionnel décodé, ajouter 1 au nombre des codes à barres bidimensionnels pré-stockés qui ont le même identificateur de code à barres bidimensionnel de groupe pour obtenir une somme et comparer la somme avec le nombre de codes à barres assemblés (607).

12. Procédé selon la revendication 11, comprenant :
si la somme est égale au nombre de codes à barres assemblés, assembler les données d'informations dans ce groupe de codes à barres bidimensionnels selon le nombre de séquence (609), décoder les codes à barres bidimensionnels en les données d'application, et délivrer les données d'application à l'application de couche supérieure des codes à barres bidimensionnels (603).

13. Procédé pour décoder des codes à barres bidimensionnels comprenant les étapes suivantes :
obtenir des codes à barres bidimensionnels qui comprennent une zone d'assembleur et une zone de données d'informations (1001) ; et
décoder les codes à barres bidimensionnels pour générer des données d'application, et délivrer les données d'application à une application de couche supérieure des codes à barres bidimensionnels (1003) ;
où après obtention des codes à barres bidimensionnels, le procédé comprend en outre les étapes suivantes : ajouter un nombre subséquent de codes à barres à un nombre de séquence d'un code à barres assemblé pour obtenir un nombre total de codes à barres assemblés ; évaluer le nombre total de codes à barres assemblés (1002) ; si le nombre total de codes à barres assemblés est égal à 1, décoder le code à barres bidimensionnel pour générer les données d'application, et délivrer les données d'application à l'application de couche supérieure des codes à barres bidimensionnels (1003) ; si le nombre total de codes à barres assemblés est supérieur à 1, évaluer si l'identificateur de code à barres bidimensionnel de groupe du code à barres bidimensionnel obtenu est le même que celui du code à barres bidimensionnel décodé (1004);
où la zone d'assembleur comprend un identificateur de code à barres bidimensionnel de groupe, un identificateur de nombre subséquent, et une séquence d'assemblage ; et
où l'identificateur de code à barres bidimensionnel de groupe identifie un groupe de codes à barres bidimensionnels qui nécessitent d'être assemblés et le même groupe de codes à barres bidimensionnels pour assemblage a le même identificateur de code à barres bidimensionnel de groupe ; la séquence d'assemblage indique la position de ce code à barres bidimensionnel dans les données assemblées à coder ; et
l'identificateur de nombre subséquent identifie le nombre subséquent de codes à barres, lequel nombre subséquent est obtenu en soustrayant le nombre de séquence de ce code à barres assemblé du nombre total de codes à barres bidimensionnels assemblés des données à coder.

14. Procédé selon la revendication 13, dans lequel :
après avoir évalué si l'identificateur de code à barres bidimensionnel de groupe du code à barres bidimensionnel obtenu est le même que celui du code à barres bidimensionnel décodé, le procédé comprend les étapes suivantes : si l'identificateur de code à barres bidimensionnel de groupe du code à barres bidimensionnel obtenu est le même que celui du code à barres bidimensionnel décodé, évaluer si un nombre de séquence dans la séquence d'assemblage du code à barres bidimensionnel obtenu est le même que celui du code à barres bidimensionnel décodé (1005) ; si aucun nombre de séquence dans la séquence d'assemblage du code à barres bidimensionnel obtenu n'est le même que celui du code à barres bidimensionnel décodé, ajouter 1 au nombre de codes à barres bidimensionnels pré-stockés qui ont le même identificateur de code à barres bidimensionnel de groupe pour obtenir une somme, et comparer la somme avec le nombre de codes à barres assemblés (1007).

15. Procédé selon la revendication 14, dans lequel :
après comparaison de la somme avec le nombre de codes à barres assemblés, le procédé comprend les étapes suivantes : si la somme est égale au nombre de codes à barres assemblés, assembler les données d'informations dans ce groupe de codes à barres bidimensionnels selon le nombre de séquence, décoder les codes à barres bidimensionnels en les données d'application, et délivrer les données d'application à l'application de couche supérieure des codes à barres bidimensionnels (1003).

16. Appareil de codage, comprenant un moyen pour implémenter le procédé pour coder des codes à barres bidimensionnels selon l'une quelconque des revendications 1 à 7.

17. Appareil de décodage, comprenant un moyen pour implémenter le procédé pour décoder des codes à barres bidimensionnels selon l'une quelconque des revendications 8 à 15.
